# EUROPEAN PATENT APPLICATION

(11) **EP 4 852 082 A1**
(43) Date of publication of application: **09.12.2026**
(21) Application number: 25767180.0
(22) Date of filing: 18.02.2025
(51) Int. Cl.: H01M 4/36, H01M 4/38, H01M 4/62, H01M 4/134, H01M 10/0525

(54) **NEGATIVE ELECTRODE ACTIVE PARTICLE, PREPARATION METHOD THEREFOR, NEGATIVE ELECTRODE SHEET, BATTERY, AND ELECTRONIC DEVICE**

(30) Priority: 04.03.2024 CN 202410244544
(71) Applicant: GUANGDONG OPPO MOBILE TELECOMMUNICATIONS CORP., LTD., Dongguan, Guangdong 523860 (CN)
(72) Inventor: YU, Pei, Dongguan, Guangdong 523860 (CN); LI, Kui, Dongguan, Guangdong 523860 (CN); TIAN, Chen, Dongguan, Guangdong 523860 (CN)
(74) Representative: Penza, Giancarlo
(86) International application number: PCT/CN2025/077842
(87) International publication number: WO 2025/185439

(57) **Abstract**

The present application provides a negative electrode active particle, a preparation method therefor, a negative electrode plate, a battery, and an electronic device. The negative electrode active particle of the present application includes a matrix particle and a plurality of carbon microspheres. The plurality of carbon microspheres are distributed on a surface of the matrix particle, and an average particle size d1 of the carbon microspheres and an average particle size d2 of the matrix particle satisfy a relationship: 0.001≤ d1/d2 ≤0.5. The negative electrode active particle of the present application have good cycle performance.

## Description

### TECHNICAL FIELD

The disclosure relates to the field of batteries, and particularly to a negative electrode active particle and a preparation method therefor, a negative electrode plate, a battery, and an electronic device.

### BACKGROUND

With the development of electronic devices, higher demands are put forward on the energy density of batteries in terms of longer endurance as well as being lighter and thinner. However, existing materials with high theoretical specific capacity (e.g., silicon materials with a theoretical specific capacity of 4200 mAh/g) have poor cycling performance.

### SUMMARY

In a first aspect, embodiments of the disclosure provide a negative electrode active particle, and the negative electrode active particle includes: a matrix particle; and a plurality of carbon microspheres distributed on a surface of the matrix particle. An average particle size d1 of the carbon microspheres and an average particle size d2 of the matrix particle satisfy a relationship: 0.001 ≤ d1/d2 ≤ 0.5.

In a second aspect, the embodiments of the disclosure further provide a method for preparing a negative electrode active particle, and the method includes: providing a matrix particle; and forming a plurality of carbon microspheres on a surface of the matrix particle. An average particle size d1 of the carbon microspheres and an average particle size d2 of the matrix particle satisfy a relationship: 0.001 ≤ d1/d2 ≤ 0.5.

In a third aspect, the embodiments of the disclosure further provide a negative electrode active particle, the negative electrode active particle includes a matrix particle, and the matrix particle includes: a porous skeleton having a plurality of pores; silicon particles, the silicon particles being located in the plurality of pores, and there being a gap between each silicon particle and an inner wall of a respective pore; and a carbon coating layer, the carbon coating layer wrapping around an outer periphery of the porous skeleton to close the gaps, thereby forming closed pores from the gaps. An average sphericity of the matrix particle is greater than or equal to 0.8. An average mass fraction of the silicon particles in a negative electrode active material composed of a plurality of the negative electrode active particles is A, and a mass fraction of silicon particles in each of 80% or more of the negative electrode active particles ranges from A-10 wt% to A+10 wt%.

In a fourth aspect, the embodiments of the disclosure further provide a method for preparing a negative electrode active particle, the negative electrode active particle includes a matrix particle, and the method includes: providing a porous skeleton having a plurality of pores, an average sphericity of the porous skeleton being greater than or equal to 0.8; depositing silicon particles in the plurality of pores by introducing a silicon source gas into the porous skeleton; and obtaining the matrix particle by forming a carbon coating layer on a surface of the porous skeleton having the silicon particles. The matrix particle comprises the porous skeleton, the silicon particles, and the carbon coating layer. The silicon particles are located in the plurality of pores, and there is a gap between each silicon particle and an inner wall of a respective pore. The carbon coating layer wraps around an outer periphery of the porous skeleton to close the gap, thereby forming closed pores from the gaps. The average sphericity of the matrix particle is greater than or equal to 0.8. An average mass fraction of the silicon particles in a negative electrode active material composed of a plurality of the negative electrode active particles is A, and a mass fraction of silicon particles in each of 80% or more of the negative electrode active particles ranges from A-10 wt% to A+10 wt%.

In a fifth aspect, the embodiments of the disclosure further provide a negative electrode plate, and the negative electrode plate includes: a negative electrode current collector; and a negative electrode active layer provided on a surface of the negative electrode current collector. The negative electrode active layer includes the negative electrode active particle according to the embodiments of the disclosure or the negative electrode active particle prepared by the method for preparing a negative electrode active particle according to the embodiments of the disclosure.

In a sixth aspect, the embodiments of the disclosure further provide a battery, and the battery includes: an electrolyte; a positive electrode plate at least partially immersed in the electrolyte; a separator, the separator being located on one side of the positive electrode plate and at least partially immersed in the electrolyte; and the negative electrode plate according to the embodiments of the disclosure, the negative electrode plate being disposed on a side of the separator away from the positive electrode plate and at least partially immersed in the electrolyte.

In a seventh aspect, the embodiments of the disclosure further provide an electronic device, and the electronic device includes: a device body; and the battery according to the embodiments of the disclosure, the battery being configured to power to the device body.

### BRIEF DESCRIPTION OF THE DRAWINGS

In order to more clearly illustrate the technical solutions in the embodiments of the disclosure, drawings required in the embodiments are briefly introduced below. Apparently, the drawings described below are only some embodiments of the disclosure. For those of ordinary skill in the art, other drawings can also be obtained based on these drawings without creative efforts.
FIG. 1 is a schematic structural view of a negative electrode active particle according to an embodiment of the disclosure.
FIG. 2 is a schematic structural view of the negative electrode active particle according to another embodiment of the disclosure.
FIG. 3 is a schematic structural view of a matrix particle according to an embodiment of the disclosure.
FIG. 4 is a schematic structural view of the negative electrode active particle according to still another embodiment of the disclosure.
FIG. 5 is a schematic structural view of the negative electrode active particle according to yet still another embodiment of the disclosure.
FIG. 6 is a schematic flowchart of a method for preparing a negative electrode active particle according to an embodiment of the disclosure.
FIG. 7 is a schematic flowchart of a method for preparing a matrix particle according to an embodiment of the disclosure.
FIG. 8 is a schematic structural view of a negative electrode plate according to an embodiment of the disclosure.
FIG. 9 is a schematic structural view of a battery according to an embodiment of the disclosure.
FIG. 10 is a schematic cross-sectional view of the battery taken along line A-A in FIG. 9 according to an embodiment of the disclosure.
FIG. 11 is a schematic structural view of a positive electrode plate according to an embodiment of the disclosure.
FIG. 12 is a scanning electron microscope image of the matrix particles according to Example 1 of the disclosure.
FIG. 13 is a color energy dispersive spectrometer image of the matrix particles according to Example 1 of the disclosure.
FIG. 14 is a grayscale energy dispersive spectrometer image of the matrix particles according to Example 1 of the disclosure.
FIG. 15 is a scanning electron microscope image of the negative electrode active particles according to Example 6 of the disclosure.
FIG. 16 is a schematic structural view of an electronic device according to an embodiment of the disclosure.
FIG. 17 is an exploded view schematically illustrating the structure of the electronic device according to an embodiment of the disclosure.
FIG. 18 is a block diagram of the electronic device according to an embodiment of the disclosure.

Description of Reference Numerals:
100 - negative electrode active particle, 10 - matrix particle, 11 - porous skeleton, 111 - pore, 12 - silicon particle, 13 - carbon coating layer, 14 - closed pore, 20 - carbon microsphere, 30 - wrapping layer, 400 - negative electrode plate, 410 - negative electrode current collector, 420 - negative electrode active layer, 500 - battery, 510 - positive electrode plate, 511 - positive electrode current collector, 513 - positive electrode active layer, 530 - separator, 550 - case, 570 - end cap assembly, 600 - electronic device, 610 - device body, 611 - display screen, 613 - middle frame, 615 - housing, 616 - memory, 617 - processor, and 618 - camera module.

### DETAILED DESCRIPTION OF PREFERRED EMBODIMENTS

In order to enable those skilled in the art to better understand the solutions of the disclosure, the technical solutions in the embodiments of the disclosure will be clearly and comprehensively described below with reference to the drawings in the embodiments of the disclosure. Apparently, the described embodiments are only a part of the embodiments of the disclosure, rather than all the embodiments. All other embodiments, obtained by those of ordinary skill in the art based on the embodiments in the disclosure without creative efforts, shall fall within the protection scope of the disclosure.

Terms "first", "second", etc. in the specification and claims of the disclosure and the drawings are used to distinguish different objects, rather than to describe a specific order. In addition, terms "include/comprise" and "have/with" and any variations thereof are intended to cover a non-exclusive inclusion. For example, a process, method, system, product, or device that includes a series of operations or units is not limited to the listed operations or units, but optionally further includes unlisted operations or units, or optionally further includes other operations or units inherent to such process, method, product, or device.

The technical solutions in the embodiments of the disclosure will be described below with reference to the drawings.

It should be noted that, for ease of description, the same reference numerals denote the same components in the embodiments of the disclosure; and for the sake of brevity, detailed descriptions of the same components are omitted in different embodiments.

With the continuous development of lithium-ion battery technology, lithium-ion batteries have advantages such as high specific capacity, no memory effect, high operating voltage, fast charging speed, wide operating temperature range, long cycle life, small size, and light weight, compared with other types of batteries such as lead-acid and nickel-cadmium batteries. At present, lithium-ion batteries have been widely used in fields such as mobile phones, laptop computers, electric vehicles, and energy storage cabinets, and their application range is becoming increasingly wider.

Silicon materials have a high theoretical specific capacity (the theoretical specific capacity of silicon is 4200 mAh/g), and are the most promising negative electrode materials for next-generation high-energy-density batteries. However, silicon itself undergoes tremendous expansion/swelling during lithium intercalation, which easily causes silicon particles to break, causing the silicon particles to repeatedly generate new solid electrolyte interface (SEI) films during charging and discharging processes. This accelerates the consumption of the electrolyte, thereby causing the cycle capacity retention rate of the battery to decline too quickly. In addition, the silicon particles undergo tremendous volume expansion during lithium intercalation, and during the expansion and contraction of the silicon particles, the silicon particles may also be caused to detach from the surrounding binder and conductive agent. This causes the silicon particles to lose the conductive network, the expansion of the negative electrode plate is further increased, and the cycling performance is further deteriorated.

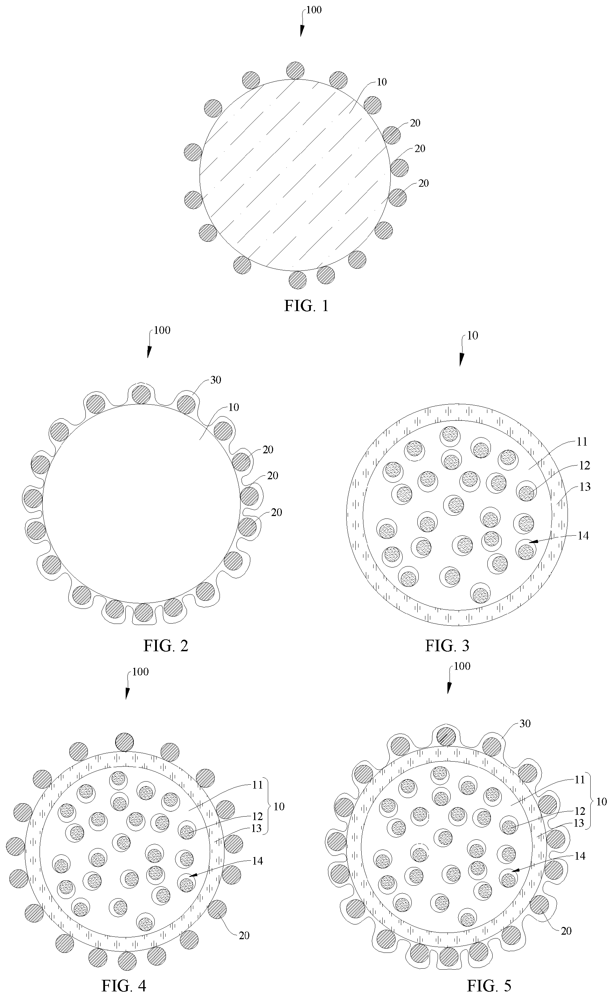

Referring to FIG. 1, the embodiments of the disclosure provide a negative electrode active particle 100. The negative electrode active particle 100 includes a matrix particle (which may also be called base particle) 10 and a plurality of carbon microspheres 20. The plurality of carbon microspheres 20 are distributed on a surface of the matrix particle 10. An average particle size d1 of the carbon microspheres 20 and an average particle size d2 of the matrix particle 10 satisfy a relationship: 0.001 ≤ d1/d2 ≤ 0.5.

In some implementations, the matrix particle 10 may be, but not limited to, a silicon-based particle.

The negative electrode active particle 100 of the disclosure may be used in a battery (e.g., a lithium battery). Specifically, the negative electrode active particle 100 may be used as a negative electrode active material in a negative electrode active layer of a negative electrode plate of a battery. The negative electrode active layer includes the negative electrode active particles 100, a negative electrode binder, and a negative electrode conductive agent.

In some implementations, the ratio d1/d2 of the average particle size d1 of the carbon microspheres 20 to the average particle size d2 of the matrix particle 10 may be, but not limited to, 0.001, 0.002, 0.004, 0.006, 0.008, 0.01, 0.02, 0.04, 0.06, 0.08, 0.1, 0.15, 0.2, 0.25, 0.3, 0.35, 0.4, 0.45, 0.5, etc. If the ratio d1/d2 of the average particle size d1 of the carbon microspheres 20 to the average particle size d2 of the matrix particle 10 is too small, it shows that the sizes of the carbon microspheres 20 are too small, the concave-convex structure on the surface of the negative electrode active particle 100 is not obvious, and the surface is too smooth. When such negative electrode active particle is applied to a negative electrode plate, it is difficult to closely intertwine and connect with the negative electrode binder and the negative electrode conductive agent; and during lithium intercalation and deintercalation of the negative electrode active particle 100, the negative electrode active particle 100 is prone to detach from the negative electrode binder and the negative electrode conductive agent, thereby causing pulverization of the negative electrode active layer of the negative electrode plate and reducing the cycling performance of the battery. If the ratio d1/d2 of the average particle size d1 of the carbon microspheres 20 to the average particle size d2 of the matrix particle 10 is too large, the compaction density of the negative electrode active particle 100 will be reduced, and the gravimetric capacity (which may also be called specific capacity, or capacity per gram) of the negative electrode active particle 100 will be reduced, thereby reducing the energy density of the battery using the negative electrode active particle 100. When the ratio d1/d2 of the average particle size d1 of the carbon microspheres 20 to the average particle size d2 of the matrix particle 10 is in a range of 0.001 to 0.5, a suitable concave-convex structure may be formed on the surface of the negative electrode active particle 100, which can intertwine and interlock with the binder and the negative electrode conductive agent in a negative electrode active layer of a negative electrode plate when such negative electrode active particle is applied to the negative electrode active layer, thereby reducing the detachment of the negative electrode active particle 100 from the negative electrode binder and the negative electrode conductive agent, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

Further, the ratio d1/d2 of the average particle size d1 of the carbon microspheres 20 to the average particle size d2 of the matrix particle 10 is in a range of 0.005 ≤ d1/d2 ≤ 0.4. In this case, a suitable concave-convex structure can be formed on the surface of the negative electrode active particle 100, which can intertwine and interlock with the binder and the negative electrode conductive agent in a negative electrode active layer of a negative electrode plate when such negative electrode active particle is applied to the negative electrode active layer, thereby reducing the detachment of the negative electrode active particle 100 from the negative electrode binder and the negative electrode conductive agent, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

Still further, the ratio d1/d2 of the average particle size d1 of the carbon microspheres 20 to the average particle size d2 of the matrix particle 10 is in a range of 0.01 ≤ d1/d2 ≤ 0.35. In this case, a suitable concave-convex structure can be formed on the surface of the negative electrode active particle 100, which can intertwine and interlock with the binder and the negative electrode conductive agent in a negative electrode active layer of a negative electrode plate when such negative electrode active particle is applied to the negative electrode active layer, thereby reducing the detachment of the negative electrode active particle 100 from the negative electrode binder and the negative electrode conductive agent, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

In some implementations, the plurality of carbon microspheres 20 may be closely arranged on the surface of the matrix particle 10, or may be provided on the surface of the matrix particle 10 with the carbon microspheres spaced apart.

The negative electrode active particle 100 of the embodiments of the disclosure includes the matrix particle 10 and the plurality of carbon microspheres 20. The plurality of carbon microspheres 20 are distributed on the surface of the matrix particle 10. The average particle size d1 of the carbon microspheres 20 and the average particle size d2 of the matrix particle 10 satisfy the relationship: 0.001 ≤ d1/d2 ≤ 0.5. In this way, a suitable concave-convex structure can be formed on the surface of the negative electrode active particle 100, which can intertwine and interlock with the binder and the negative electrode conductive agent in a negative electrode active layer of a negative electrode plate when such negative electrode active particle is applied to the negative electrode active layer, thereby reducing the detachment of the negative electrode active particle 100 from the negative electrode binder and the negative electrode conductive agent and reducing the loss of the conductive network, which helps to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

In some embodiments, the average particle size d1 of the carbon microspheres 20 is in a range of 50 nm ≤ d1 ≤ 2000 nm (i.e., 2 µm). Specifically, the average particle size d1 of the carbon microspheres 20 may be, but not limited to, 50 nm, 100 nm, 150 nm, 200 nm, 250 nm, 300 nm, 350 nm, 400 nm, 600 nm, 800 nm, 1000 nm, 1200 nm, 1400 nm, 1600 nm, 1800 nm, 2000 nm, etc. If the average particle size of the carbon microspheres 20 is too small, when the negative electrode active particle 100 is applied to the negative electrode plate of a battery, a function of network interlocking is not provided, causing the negative electrode active particle 100 to easily detach from the negative electrode binder and the negative electrode conductive agent during lithium intercalation and deintercalation, thereby causing pulverization of the negative electrode active layer of the negative electrode plate and reducing the cycling performance of the battery. If the average particle size d1 of the carbon microspheres 20 is too large, the compaction density of the negative electrode active particle 100 will be reduced, and the gravimetric capacity of the negative electrode active particle 100 will be reduced, thereby reducing the energy density of the battery using the negative electrode active particle 100. In a case where the average particle size of the carbon microspheres 20 is in a range of 50 nm to 2000 nm, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

Further, the average particle size d1 of the carbon microspheres 20 is in a range of 80 nm ≤ d1 ≤ 1500 nm. In this case, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

Still further, the average particle size d1 of the carbon microspheres 20 is in a range of 100 nm ≤ d1 ≤ 1000 nm. In this case, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

Still further, the average particle size d1 of the carbon microspheres 20 is in a range of 100 nm ≤ d1 ≤ 800 nm. In this case, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

In some embodiments, the mass fraction of the plurality of carbon microspheres 20 in the negative electrode active particle 100 ranges from 0.05 wt% to 5 wt%. Specifically, the mass fraction of the plurality of carbon microspheres 20 in the negative electrode active particle 100 may be, but not limited to, 0.05 wt%, 0.08 wt%, 0.1 wt%, 0.2 wt%, 0.4 wt%, 0.6 wt%, 0.8 wt%, 1 wt%, 1.5 wt%, 2 wt%, 2.5 wt%, 3 wt%, 3.5 wt%, 4 wt%, 4.5 wt%, 5 wt%, etc. If the mass fraction of the plurality of carbon microspheres 20 in the negative electrode active particle 100 is too low, the number of carbon microspheres 20 is too small or the particle sizes of the carbon microspheres 20 are too small, which causes the function of network interlocking not to be provided when the negative electrode active particle 100 is applied to the negative electrode plate of a battery, causing the negative electrode active particle 100 to easily detach from the negative electrode binder and the negative electrode conductive agent during lithium intercalation and deintercalation, thereby causing pulverization of the negative electrode active layer of the negative electrode plate and reducing the cycling performance of the battery. If the mass fraction of the carbon microspheres 20 is too large, it shows that the particle sizes of the carbon microspheres 20 are too large, which will reduce the compaction density of the negative electrode active particle 100 and the gravimetric capacity of the negative electrode active particle 100, thereby reducing the energy density of the battery using the negative electrode active particle 100. In a case where the mass fraction of the plurality of carbon microspheres 20 in the negative electrode active particle 100 ranges from 0.05 wt% to 5 wt%, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

Further, the mass fraction of the plurality of carbon microspheres 20 in the negative electrode active particle 100 ranges from 0.1 wt% to 4.5 wt%. In this case, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

Still further, the mass fraction of the plurality of carbon microspheres 20 in the negative electrode active particle 100 ranges from 0.5 wt% to 4 wt%. In this case, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

In some embodiments, the carbon microspheres 20 include a carbon element and a first doping element. Doping the carbon microspheres 20 with the first doping element can improve the initial coulombic efficiency (ICE)/first-cycle efficiency or kinetic performance of the negative electrode active particle 100.

In some implementations, the mass fraction of the carbon element in the carbon microspheres 20 ranges from 50 wt% to 100 wt%. The first doping element includes at least one of nitrogen, oxygen, fluorine, chlorine, phosphorus, sulfur, titanium, zirconium, vanadium, molybdenum, tungsten, aluminum, and iron. The mass fraction of the first doping element in the carbon microspheres 20 ranges from 0 to 50%.

In the embodiments of the disclosure, when a number ranging from a to b is mentioned, unless otherwise specified, it indicates that the number may be any value between a and b, including the endpoint values a and b.

It should be noted that, when the mass fraction of the carbon element in the carbon microspheres 20 is 100 wt% and the mass fraction of the first doping element in the carbon microspheres 20 is 0, the carbon microsphere 20 includes only the carbon element and does not contain other elements.

Specifically, the mass fraction of the carbon element in the carbon microspheres 20 may be, but not limited to, 50 wt%, 55 wt%, 60 wt%, 65 wt%, 70 wt%, 75 wt%, 80 wt%, 85 wt%, 90 wt%, 95 wt%, 100 wt%, etc.

Specifically, the mass fraction of the first doping element in the carbon microspheres 20 may be, but not limited to, 0 wt%, 5 wt%, 10 wt%, 15 wt%, 20 wt%, 25 wt%, 30 wt%, 35 wt%, 40 wt%, 45 wt%, 50 wt%, etc.

In the embodiments, doping with the oxygen element can alleviate the expansion of the matrix particle 10 during lithium intercalation of the negative electrode active particle 100, thereby reducing the expansion rate of the negative electrode active particle 100 and improving the cycling performance of the battery using the negative electrode active particle 100. Doping with sulfur, nitrogen, or phosphorus can improve the electrical conductivity of the negative electrode active particle 100, thereby improving the kinetic performance of the battery using the negative electrode active particle 100. Doping with lithium has a lithium-supplementing effect, which is beneficial for improving the initial coulombic efficiency of the battery using the negative electrode active particle 100. Aluminum, magnesium, titanium, sodium, copper, and iron can improve the electrical conductivity of the carbon microspheres 20, thereby improving the kinetic performance of the battery using the negative electrode active particle 100.

In some implementations, the shape of the carbon microsphere 20 may be, but not limited to, spherical, ellipsoidal, or other irregular shapes.

Referring to FIG. 2, in some embodiments, the negative electrode active particle 100 further includes a wrapping layer 30 provided on surfaces of the plurality of carbon microspheres 20, and the wrapping layer 30 includes at least one of a conductive agent and a binder. By forming the wrapping layer 30 having the conductive agent or the binder on the surfaces of the carbon microspheres 20, the conductive agent can improve the electronic conductivity of the negative electrode active particle 100. When the negative electrode active particle 100 is made into a negative electrode plate, the electrical connection between the negative electrode active particle 100 and adjacent negative electrode active particles 100 can be increased, thereby improving the kinetic performance of the negative electrode plate. When the negative electrode active particle 100 is made into a negative electrode plate, the binder can enhance the adhesion between adjacent negative electrode active particles 100, reducing the expansion at the negative electrode plate level during lithium intercalation and deintercalation, and improving the cycling performance of the negative electrode plate.

In some implementations, the conductive agent may be, but not limited to, at least one of carbon nanotubes, graphene, and the like. These conductive agents have good electrical conductivity, and can better improve the electrical conductivity of the negative electrode active particle 100, thereby improving the kinetic performance and cycling performance of the negative electrode active particle 100.

In some implementations, the mass fraction of the conductive agent in the negative electrode active particle 100 ranges from 0.01 wt% to 5 wt%. Specifically, the mass fraction of the conductive agent in the negative electrode active particle 100 may be, but not limited to, 0.01 wt%, 0.05 wt%, 0.1 wt%, 0.3 wt%, 0.5 wt%, 0.8 wt%, 1 wt%, 1.5 wt%, 2 wt%, 2.5 wt%, 3 wt%, 3.5 wt%, 4 wt%, 4.5 wt%, 5 wt%, etc. If the mass fraction of the conductive agent in the negative electrode active particle 100 is too small, it cannot improve the electrical conductivity of the negative electrode active particle 100; and if the mass fraction of the conductive agent in the negative electrode active particle 100 is too large, the gravimetric capacity of the negative electrode active particle 100 is reduced.

In some implementations, the binder may include at least one of polyacrylic acid (PAA), polymerized styrene butadiene rubber (SBR), polyacrylonitrile (PAN), polyacrylamide (PAM), polyvinyl alcohol (PVA), and the like. These binders can better wrap around the surfaces of the carbon microspheres 20, thereby increasing the adhesion between adjacent negative electrode active particles 100, so that the expansion rate at the negative electrode plate level can be better reduced when the negative electrode active particle 100 is applied to a negative electrode plate.

In some implementations, the mass fraction of the binder in the negative electrode active particle 100 ranges from 0.01 wt% to 5 wt%. Specifically, the mass fraction of the binder in the negative electrode active particle 100 may be, but not limited to, 0.01 wt%, 0.05 wt%, 0.1 wt%, 0.3 wt%, 0.5 wt%, 0.8 wt%, 1 wt%, 1.5 wt%, 2 wt%, 2.5 wt%, 3 wt%, 3.5 wt%, 4 wt%, 4.5 wt%, 5 wt%, etc. If the mass fraction of the binder in the negative electrode active particle 100 is too small, it cannot increase the adhesion between adjacent negative electrode active particles 100; and if the mass fraction of the binder in the negative electrode active particle 100 is too large, the gravimetric capacity of the negative electrode active particle 100 is reduced.

Referring to FIG. 3 to FIG. 5, in some embodiments, the matrix particle 10 includes a porous skeleton 11, silicon particles 12, and a carbon coating layer 13. The porous skeleton 11 has a plurality of pores 111, and an average sphericity of the porous skeleton 11 is greater than or equal to 0.8. The silicon particles 12 are located in the plurality of pores 111, and there is a gap between each silicon particle 12 and an inner wall of a respective pore 111. The carbon coating layer 13 wraps around an outer periphery of the porous skeleton 11 to close/seal the gaps, thereby forming closed pores 14 from the gaps (that is, closed pores 14 are defined by the gaps and the carbon coating layer 13).

It can be understood that the carbon coating layer 13 is used to close the pores 111 of the porous skeleton 11 to prevent the silicon particles 12 from being exposed on the surface of the negative electrode active particle 100. The porous skeleton 11 and the silicon particles 12 are both wrapped within the carbon coating layer 13, and the gaps between the silicon particles 12 and the inner walls of the pores form the closed pores 14. When the silicon particles 12 are exposed on the surface of the negative electrode active particle 100, the silicon particles 12 are in direct contact with the electrolyte, and side reactions are caused, which consumes active silicon and the electrolyte, reduces the specific capacity of the silicon particles 12, and causes the cycle capacity retention rate of the negative electrode active particle 100 to continuously decline with increase of the number of cycles. In the embodiments, the carbon coating layer 13 can prevent the silicon particles 12 from directly contacting the electrolyte, thereby avoiding more side reactions, so that the negative electrode active particle 100 has a higher cycle capacity retention rate, especially high-temperature cycling performance.

It should be noted that there are multiple closed pores 14, and the multiple closed pores 14 are dispersed in the negative electrode active particle 100.

Specifically, the average sphericity of the porous skeleton 11 may be, but not limited to, 0.8, 0.82, 0.84, 0.86, 0.88, 0.9, 0.92, 0.94, 0.96, 0.98, 1.0, etc. If the sphericity of the porous skeleton 11 is too low, the uniformity of distribution of the silicon particles 12 and the uniformity of the size of the silicon particles 12 during silicon deposition in the porous skeleton 11 are reduced, thereby causing the anisotropy of the porous skeleton 11 to be more obvious. This causes the anisotropic expansion rates of the negative electrode active particle 100 to vary greatly during lithium intercalation of the negative electrode active particle, thereby reducing the cycle capacity retention rate of the battery using the negative electrode active particle 100. The better the sphericity of the porous skeleton 11, the more conducive it is to improving the transmission of the silicon source gas in the porous skeleton 11 during silicon deposition, so that the silicon source gas is more uniformly deposited in the plurality of pores 111 of the porous skeleton 11, and the silicon particles 12 can be more uniformly deposited, improving the uniformity of distribution of the silicon particles 12 in the porous skeleton 11 and the uniformity of the size of the silicon particles 12. Thus, during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing damage to the negative electrode active particle 100 during lithium intercalation and improving the cycling performance of the negative electrode active particle 100.

In the embodiments, the matrix particle 10 includes the porous skeleton 11, the silicon particles 12, and the carbon coating layer 13. The average sphericity of the porous skeleton 11 is greater than or equal to 0.8. This can improve the transmission of the silicon source gas in the porous skeleton 11 during silicon deposition, so that the silicon source gas is more uniformly deposited in the plurality of pores 111 of the porous skeleton 11, and the silicon particles 12 can be more uniformly deposited, improving the uniformity of distribution of the silicon particles 12 in the porous skeleton 11 and the uniformity of the size of the silicon particles 12. In addition, it can also improve the isotropy of the matrix particle 10, so that during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing damage to the negative electrode active particle 100 during lithium intercalation and improving the cycling performance of the negative electrode active particle 100. There is a gap between each silicon particle 12 and the inner wall of the respective pore 111, and the gap can better buffer the expansion of the silicon particle 12 during lithium intercalation of the negative electrode active particle 100, reducing the expansion rate of the negative electrode active particle 100. The carbon coating layer 13 can better confine the silicon particles 12 within the pores 111, preventing the silicon particles 12 from escaping during lithium intercalation, reducing side reactions of the silicon particles 12, and improving the cycling performance of the negative electrode active particle 100.

In some implementations, the average sphericity of the matrix particle 10 is greater than or equal to 0.8. Specifically, the sphericity of the porous skeleton 11 may be, but not limited to, 0.8, 0.82, 0.84, 0.86, 0.88, 0.9, 0.92, 0.94, 0.96, 0.98, 1.0, etc. If the sphericity of the matrix particle 10 is too small, the anisotropy of the matrix particle 10 increases, which increases the anisotropic expansion of the matrix particle 10 during lithium intercalation of the silicon particles 12, and reduces the cycling performance of the negative electrode active particle 100. When the average sphericity of the matrix particle 10 is greater than or equal to 0.8, the isotropy of the matrix particle 10 can be improved, so that during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing the expansion rate of the matrix particle 10, reducing damage to the negative electrode active particle 100 during lithium intercalation, and improving the cycling performance of the negative electrode active particle 100.

In some implementations, the porous skeleton 11 may be a primary particle or a secondary particle. When the porous skeleton 11 is a primary particle, the porous skeleton 11 has better sphericity, making the deposition of the silicon particles 12 on the porous skeleton 11 more uniform.

In some embodiments, the porous skeleton 11 includes a carbon element and a second doping element. The second doping element includes at least one of nitrogen, oxygen, fluorine, chlorine, phosphorus, sulfur, silicon, titanium, zirconium, vanadium, molybdenum, tungsten, aluminum, and iron. The mass fraction of the carbon element in the porous skeleton 11 is greater than or equal to 80 wt%.

In some implementations, in the porous skeleton 11, the mass fraction of the carbon element ranges from 80 wt% to 100 wt%, and the mass fraction of the second doping element ranges from 0 to 20 wt%.

Specifically, the mass fraction of the carbon element in the porous skeleton 11 may be, but not limited to, 80 wt%, 82 wt%, 84 wt%, 86 wt%, 88 wt%, 90 wt%, 92 wt%, 94 wt%, 96 wt%, 98 wt%, 100 wt%, etc.

Specifically, the mass fraction of the second doping element in the porous skeleton 11 may be, but not limited to, 0 wt%, 2 wt%, 4 wt%, 6 wt%, 8 wt%, 10 wt%, 12 wt%, 14 wt%, 16 wt%, 18 wt%, 20 wt%, etc.

In the embodiments, by doping the porous skeleton 11 with the second doping element, the porous skeleton 11 can have a high strength, which can better prevent the negative electrode active particle 100 from cracking during lithium intercalation, improving the cycle capacity retention rate of the battery using the negative electrode active particle 100. In addition, the second doping element can improve the electrical conductivity of the porous skeleton 11, improving the kinetic performance of the negative electrode active particle 100, and thus improving the kinetic performance of the battery using the negative electrode active particle 100.

In some other embodiments, the porous skeleton 11 may be at least one of porous carbon, porous carbide (e.g., titanium carbide, TiC), porous nitride, porous metal-organic compound, and the like. Using these compounds as the porous skeleton 11 can better suppress the expansion of the silicon particles 12 during lithium intercalation of the negative electrode active particle 100.

In some implementations, the porous carbide may be, but not limited to, at least one of VxC, TixC, SixC, WxC, TaxC, NbxC, ZrxC, BxC, MoxC, FexC, TixAlyC, TixSiyC, and the like.

In some implementations, the mass fraction of the carbon element in the porous carbide ranges from 5% to 99%. Specifically, the mass fraction of the carbon element in the porous carbide may be, but not limited to, 5%, 10%, 20%, 30%, 40%, 50%, 60%, 70%, 80%, 90%, 99%, etc.

In some implementations, the porous nitride may be, but not limited to, at least one of SixN, BxN, AlxN, TixN, GaxN, ZrxN, VxN, MoxN, WxN, and the like.

In some implementations, the mass fraction of the nitrogen element in the porous nitride ranges from 5% to 99%. Specifically, the mass fraction of the nitrogen element in the porous nitride may be, but not limited to, 5%, 10%, 20%, 30%, 40%, 50%, 60%, 70%, 80%, 90%, 99%, etc.

In some implementations, the porous metal-organic compound may be, but not limited to, at least one of a Zn-based metal-organic framework, a Ni-based metal-organic framework, a Mn-based metal-organic framework, a Cu-based metal-organic framework, and the like.

In some implementations, the average size of the pores 111 is less than or equal to 4 nm. Specifically, the average size of the pores 111 may be, but not limited to, 4.0 nm, 3.8 nm, 3.6 nm, 3.4 nm, 3.0 nm, 3 nm, 2.8 nm, 2.6 nm, 2.4 nm, 2.2 nm, 2.0 nm, 1.8 nm, 1.6 nm, 1.4 nm, 1.2 nm, 1.0 nm, 0.8 nm, 0.6 nm, 0.5 nm, etc.

Further, the average size of the pores 111 ranges from 0.8 nm to 4 nm.

In some implementations, the pores 111 of the porous skeleton 11 may be measured by a nitrogen adsorption-desorption method.

In some implementations, the sizes of the closed pores 14 are less than or equal to 4 nm. Specifically, the sizes of the closed pores 14 may be, but not limited to, less than or equal to 4.0 nm, less than or equal to 3.5 nm, less than or equal to 3 nm, less than or equal to 2.8 nm, less than or equal to 2.5 nm, less than or equal to 2.3 nm, less than or equal to 2 nm, less than or equal to 1.8 nm, less than or equal to 1.5 nm, less than or equal to 1.3 nm, less than or equal to 1 nm, less than or equal to 0.8 nm, less than or equal to 0.5 nm, etc.

Further, the sizes of the closed pores 14 may be, but not limited to, 0.4 nm to 4 nm. Still further, the sizes of the closed pores 14 may be, but not limited to, 0.4 nm to 3 nm. Still further, the sizes of the closed pores 14 may be, but not limited to, 0.4 nm to 2 nm.

In the embodiments, if the sizes of the closed pores 14 are too small, when the negative electrode active particle 100 is applied to a battery and the battery is charged and discharged, the closed pores 14 are insufficient to buffer the expansion of the silicon particles 12 during lithium intercalation, thereby increasing the expansion rate of the negative electrode active particle 100, increasing the rate of electrolyte consumption, and reducing the cycle capacity retention rate of the battery. If the sizes of the closed pores 14 are too large, the energy density of the negative electrode active particle 100 is reduced.

In some implementations, the pore volume V of the porous skeleton 11 is greater than or equal to 0.3 cm³/g. The "pore volume" in the disclosure refers to the total volume of the pores 111 per unit mass of the porous skeleton 11.

In some implementations, the pore volume V of the porous skeleton 11 ranges from 0.3 cm³/g to 1.5 cm³/g. Specifically, the pore volume V of the porous skeleton 11 may be, but not limited to, 0.3 cm³/g, 0.4 cm³/g, 0.5 cm³/g, 0.6 cm³/g, 0.7 cm³/g, 0.8 cm³/g, 0.9 cm³/g, 1.0 cm³/g, 1.1 cm³/g, 1.2 cm³/g, 1.3 cm³/g, 1.4 cm³/g, 1.5 cm³/g, etc. If the pore volume of the porous skeleton 11 is too small, it is insufficient to deposit enough silicon particles 12, thereby reducing the gravimetric capacity of the negative electrode active particle 100. If the pore volume of the porous skeleton 11 is too large, there are too many pores, which also reduces the energy density of the negative electrode active particle 100, and the proportion of the porous skeleton 11 is relatively small, making it prone to breaking, thereby reducing the cycling performance of the negative electrode active particle 100.

In some embodiments, an average mass fraction of the silicon particles 12 in a negative electrode active material composed of a plurality of the negative electrode active particles 100 is A, and the mass fraction of silicon particles 12 in each of 80% or more (that is, at least 80%) of the negative electrode active particles 100 ranges from A-10 wt% to A+10 wt% (that is, for 80% or more of the negative electrode active particles, the mass fraction of silicon particles in each of these particles ranges from A-10 wt% to A+10 wt%).

Specifically, the average mass fraction of the silicon particles 12 in the negative electrode active material composed of a plurality of the negative electrode active particles 100 is A, and the mass fraction of silicon particles 12 in each of 80% or more of the negative electrode active particles 100 is in a range of A-10 wt% to A+10 wt%, or A-8 wt% to A+8 wt%, or A-6 wt% to A+6 wt%, or A-4 wt% to A+4 wt%, or A-2 wt% to A+2 wt%.

Specifically, the mass fraction of silicon particles 12 in each of 80% or more of the negative electrode active particles 100 may be in a range of A-10 wt% to A+10 wt%. Alternatively, the mass fraction of silicon particles 12 in each of 85% or more of the negative electrode active particles 100 may be in a range of A-10 wt% to A+10 wt%. Alternatively, the mass fraction of silicon particles 12 in each of 90% or more of the negative electrode active particles 100 may be in a range of A-10 wt% to A+10 wt%. Alternatively, the mass fraction of silicon particles 12 in each of 95% or more of the negative electrode active particles 100 may be in a range of A-10 wt% to A+10 wt%. Alternatively, the mass fraction of silicon particles 12 in each of 98% or more of the negative electrode active particles 100 may be in a range of A-10 wt% to A+10 wt%.

In a specific embodiment, the average mass fraction of the silicon particles 12 in the negative electrode active material composed of a plurality of the negative electrode active particles 100 is 40 wt%, and the mass fraction of silicon particles 12 in each of 80% or more of the negative electrode active particles 100 is in a range of 30 wt% to 50 wt%. In another specific embodiment, the average mass fraction of the silicon particles 12 in the negative electrode active material composed of a plurality of the negative electrode active particles 100 is 50 wt%, and the mass fraction of silicon particles 12 in each of 80% or more of the negative electrode active particles 100 is in a range of 40 wt% to 60 wt%. In another specific embodiment, the average mass fraction of the silicon particles 12 in the negative electrode active material composed of a plurality of the negative electrode active particles 100 is 50 wt%, and the mass fraction of silicon particles 12 in each of 80% or more of the negative electrode active particles 100 is in a range of 45 wt% to 55 wt%. In another specific embodiment, the average mass fraction of the silicon particles 12 in the negative electrode active material composed of a plurality of the negative electrode active particles 100 is 50 wt%, and the mass fraction of silicon particles 12 in each of 80% or more of the negative electrode active particles 100 is in a range of 48 wt% to 52 wt%. In another specific embodiment, the average mass fraction of the silicon particles 12 in the negative electrode active material composed of a plurality of the negative electrode active particles 100 is 60 wt%, and the mass fraction of silicon particles 12 in each of 80% or more of the negative electrode active particles 100 is in a range of 50 wt% to 70 wt%.

In the embodiments, by making the mass fraction of silicon particles 12 in each of more than 80% of the negative electrode active particles 100 within the range of ±10 wt%, the mass fraction of silicon particles 12 in each negative electrode active particle 100 is more balanced, so that the expansion rates of the individual negative electrode active particles 100 are close to each other during lithium intercalation of the negative electrode active particles 100, thereby avoiding excessively high content of silicon particles 12 and excessively large expansion rates in some negative electrode active particles 100, and thus enabling the negative electrode active particles 100 to have a higher cycle capacity retention rate.

In some implementations, the mass fraction of the silicon particles 12 in the negative electrode active particle 100 ranges from 20 wt% to 80 wt%. Specifically, the mass fraction of the silicon particles 12 in the negative electrode active particle 100 may be, but not limited to, 20 wt%, 25 wt%, 30 wt%, 35 wt%, 40 wt%, 50 wt%, 60 wt%, 70 wt%, 80 wt%, etc. In the embodiments, if the mass fraction of the silicon particles 12 is too low, the negative electrode active particle 100 contains too little active material, reducing the specific capacity of the negative electrode active particle 100. If the mass fraction of the silicon particles 12 is too high, during lithium intercalation of the negative electrode active particle 100, the porous skeleton 11 is insufficient to support the expansion of the silicon particles 12, making the negative electrode active particle 100 prone to cracking, which affects the cycling performance of the battery using the negative electrode active particle 100.

In some implementations, 90 wt% or more of the silicon particles 12 are distributed in the plurality of pores 111. It can be understood that most of the silicon element or silicon particles 12 in the negative electrode active particle 100 are distributed within the porous skeleton 11, and the content of silicon particles 12 outside the porous skeleton 11 is less than 10 wt%. Specifically, 90 wt% or more of the silicon particles 12 may be distributed in the plurality of pores 111; alternatively, 93 wt% or more of the silicon particles 12 may be distributed in the plurality of pores 111; alternatively, 95 wt% or more of the silicon particles 12 may be distributed in the plurality of pores 111; alternatively, 98 wt% or more of the silicon particles 12 may be distributed in the plurality of pores 111; alternatively, 100 wt% of the silicon particles 12 may be distributed in the plurality of pores 111, etc. When a silicon particle 12 is distributed outside the porous skeleton 11, it is not constrained by the porous skeleton 11 during lithium intercalation. Therefore, the more silicon particles 12 distributed outside the porous skeleton 11, the higher the expansion rate of the negative electrode active particle 100 during lithium intercalation. When 90 wt% or more of the silicon particles 12 are distributed in the plurality of pores 111, the expansion rate of the negative electrode active particle 100 during lithium intercalation can be better reduced, thereby improving the cycle capacity retention rate of the negative electrode active particle 100.

In some embodiments, the silicon particles 12 satisfy at least one of following conditions: the silicon particles 12 include a silicon element, and the mass fraction of the silicon element in the silicon particles 12 is greater than or equal to 50 wt%; and the silicon particles 12 further include a third doping element, the third doping element includes at least one of carbon, nitrogen, oxygen, fluorine, chlorine, phosphorus, sulfur, titanium, zirconium, vanadium, molybdenum, tungsten, aluminum, and iron, and the mass fraction of the third doping element in the silicon particles 12 is less than or equal to 50 wt%.

It can be understood that, in some embodiments, the silicon particles 12 include only the silicon element. In some other embodiments, the silicon particles 12 include the silicon element and the third doping element.

It can be understood that the mass fraction of the silicon element in the silicon particles 12 ranges from 50 wt% to 100 wt%, and the mass fraction of the third doping element in the silicon particles 12 ranges from 0 to 50 wt%.

Specifically, the mass fraction of the silicon element in the silicon particles 12 may be, but not limited to, 50 wt%, 52 wt%, 55 wt%, 60 wt%, 65 wt%, 70 wt%, 75 wt%, 80 wt%, 85 wt%, 90 wt%, 95 wt%, 100 wt%, etc.

Specifically, the mass fraction of the third doping element in the silicon particles 12 may be, but not limited to, 0, 1 wt%, 3 wt%, 5 wt%, 10 wt%, 15 wt%, 20 wt%, 25 wt%, 30 wt%, 35 wt%, 40 wt%, 45 wt%, 50 wt%, etc.

In the embodiments, doping with the oxygen element can alleviate the expansion of the matrix particle 10 during lithium intercalation of the negative electrode active particle 100, thereby reducing the expansion rate of the negative electrode active particle 100 and improving the cycling performance of the battery using the negative electrode active particle 100. Doping with sulfur, nitrogen, or phosphorus can improve the electrical conductivity of the negative electrode active particle 100, thereby improving the kinetic performance of the battery using the negative electrode active particle 100. Doping with lithium has a lithium-supplementing effect, which is beneficial for improving the initial coulombic efficiency of the battery using the negative electrode active particle 100. Aluminum, magnesium, titanium, sodium, copper, and iron can improve the electrical conductivity of the silicon particles 12, thereby improving the kinetic performance of the battery using the negative electrode active particle 100.

In some implementations, the average particle size d3 of the silicon particles 12 ranges from 0.4 nm ≤ d3 ≤ 4 nm. Specifically, the average particle size d3 of the silicon particles 12 may be, but not limited to, 0.4 nm, 0.5 nm, 0.6 nm, 0.7 nm, 0.8 nm, 0.9 nm, 1.0 nm, 1.1 nm, 1.2 nm, 1.3 nm, 1.4 nm, 1.5 nm, 1.6 nm, 1.7 nm, 1.8 nm, 1.9 nm, 2.0 nm, 2.3 nm, 2.5 nm, 2.8 nm, 3.0 nm, 3.3 nm, 3.5 nm, 3.8 nm, 4.0 nm, etc. If the average particle size of the silicon particles 12 is too small, the silicon is in an atomic state and cannot form a silicon phase, which reduces the intercalation of lithium ions, thereby reducing the specific capacity of the negative electrode active particle 100. If the average particle size of the silicon particles 12 is too large, during lithium intercalation of the negative electrode active particle 100, it is easy to generate a Li₁₅Si₄ crystalline phase. The occurrence of the phase transition leads to higher internal stress in the negative electrode active particle 100 and greater volume changes, thereby making the negative electrode active particle 100 more prone to cracking and reducing the cycle capacity retention rate of the negative electrode active particle 100. When the average particle size d3 of the silicon particles 12 is in a range of 0.4 nm ≤ d3 ≤ 4 nm, the silicon particles 12 have a sufficiently small size, so that the pressure on the silicon particles 12 during lithium intercalation and deintercalation is sufficiently small, reducing the cracking of the negative electrode active particle 100, ensuring the stability of the silicon structure, and further improving the cycling performance of the negative electrode active particle 100.

Further, the average particle size d3 of the silicon particles 12 is in a range of 0.4 nm ≤ d3 ≤ 2 nm. When the average particle size of the silicon particles 12 is in this range, during lithium intercalation of the negative electrode active particle 100, it is more difficult to generate the Li₁₅Si₄ crystalline phase, thereby better improving the structural stability of the negative electrode active particle 100, so that the negative electrode active particle 100 has a higher cycle capacity retention rate.

Still further, the average particle size d3 of the silicon particles 12 is in a range of 0.5 nm ≤ d3 ≤ 1.8 nm. When the average particle size of the silicon particles 12 is in this range, during lithium intercalation of the negative electrode active particle 100, it is more difficult to generate the Li₁₅Si₄ crystalline phase, thereby better improving the structural stability of the negative electrode active particle 100, so that the negative electrode active particle 100 has a higher cycle capacity retention rate.

Still further, the average particle size d3 of the silicon particles 12 is in a range of 0.7 nm ≤ d3 ≤ 1.8 nm. When the average particle size of the silicon particles 12 is in this range, during lithium intercalation of the negative electrode active particle 100, it is more difficult to generate the Li₁₅Si₄ crystalline phase, thereby better improving the structural stability of the negative electrode active particle 100, so that the negative electrode active particle 100 has a higher cycle capacity retention rate.

In some implementations, the average particle size of the silicon particles 12 may be measured by the following method: heating the negative electrode active particle 100 to 700°C in an inert atmosphere (such as nitrogen or argon) and holding for 2 hours, then cooling to room temperature; obtaining an X-ray diffraction pattern of the negative electrode active particle 100 after undergoing the heat treatment; and calculating the average particle size of the silicon particles 12 by a Scherrer method based on the full width at half maximum of the Si(111) diffraction peak near a diffraction angle 2θ=28.4° in the X-ray diffraction pattern of the negative electrode active particles 100 after undergoing the heat treatment.

In some embodiments, the closed pores 14 and the silicon particles 12 satisfy a relationship 0.5 ≤ Ia/Ib ≤ 0.95, where Ia is the minimum diffraction intensity in a range of 2θ from 8.8° to 22° in the X-ray diffraction pattern of the negative electrode active particle 100, Ib is the intensity of the Si(111) diffraction peak at 2θ from 28.2° to 28.5° in the X-ray diffraction pattern of the negative electrode active particle 100, and 2θ is the diffraction angle.

It should be noted that, in the X-ray diffraction pattern of the negative electrode active particle 100, the diffraction intensity at a diffraction angle 2θ of 8.8° is the diffraction intensity of the closed pores 14 having a size of 0.4 nm in the negative electrode active particle 100. The diffraction intensity at a diffraction angle 2θ of 22° is the diffraction intensity of the closed pores 14 having a size of 1 nm in the negative electrode active particle 100. Ia is the minimum diffraction intensity of the closed pores 14 having sizes ranging from 0.4 nm to 1 nm in the X-ray diffraction pattern.

It should be noted that, in actual measurement, the diffraction angle of the Si(111) diffraction peak may shift, but it is basically within the range of 28.2° to 28.5°.

It should be noted that Ib is the intensity of the Si(111) diffraction peak in the X-ray diffraction pattern.

It should be noted that, in the X-ray diffraction pattern, the diffraction intensity at a diffraction angle 2θ of 8.8° is the diffraction intensity of the closed pores 14 having a width of 0.4 nm. In the X-ray diffraction pattern, the diffraction intensity at a diffraction angle 2θ of 22° is the diffraction intensity of the closed pores 14 having a width of 1 nm. Ia is the minimum diffraction intensity of the closed pores 14 having sizes ranging from 0.4 nm to 1 nm in the X-ray diffraction pattern.

Specifically, Ia/Ib may be, but not limited to, 0.5, 0.52, 0.55, 0.58, 0.6, 0.62, 0.65, 0.68, 0.7, 0.73, 0.75, 0.78, 0.8, 0.83, 0.85, 0.88, 0.9, 0.92, 0.95, etc. If Ia/Ib is too small, the content of closed pores 14 is too small. In this case, when the negative electrode active particle 100 is applied to a battery and the battery is charged and discharged, the closed pores 14 are insufficient to buffer the expansion of the silicon particles 12 during lithium intercalation, thereby increasing the expansion rate of the negative electrode active particle 100, and making the negative electrode active particle 100 prone to cracking. This further causes the repeated generation of new SEI films on the surface of the negative electrode active particle 100, increasing the rate of electrolyte consumption, and reducing the cycle capacity retention rate of the battery. If Ia/Ib is too large, the content of closed pores 14 is too large, which reduces the energy density of the negative electrode active particle 100.

Further, the closed pores 14 and the silicon particles 12 satisfy a relationship 0.6 ≤ Ia/Ib ≤ 0.95. In this case, during lithium intercalation of the negative electrode active particle 100, the closed pores 14 can better match the expansion of the silicon particles 12, so that the negative electrode active particle 100 has a low expansion rate during lithium intercalation, making the negative electrode active particle 100 less prone to cracking during lithium intercalation, thereby having a higher cycle capacity retention rate; in addition, the negative electrode active particle 100 also has a high energy density.

Still further, the closed pores 14 and the silicon particles 12 satisfy a relationship 0.6 ≤ Ia/Ib ≤ 0.85. In this case, during lithium intercalation of the negative electrode active particle 100, the closed pores 14 can better match the expansion of the silicon particles 12, so that the negative electrode active particle 100 has a low expansion rate during lithium intercalation, making the negative electrode active particle 100 less prone to cracking during lithium intercalation, thereby having a higher cycle capacity retention rate; in addition, the negative electrode active particle 100 also has a high energy density.

In some implementations, the thickness of the carbon coating layer 13 ranges from 1 nm to 500 nm. Specifically, the thickness of the carbon coating layer 13 may be, but not limited to, 1 nm, 3 nm, 5 nm, 8 nm, 10 nm, 15 nm, 20 nm, 30 nm, 40 nm, 50 nm, 60 nm, 70 nm, 80 nm, 90 nm, 100 nm, 150 nm, 200 nm, 300 nm, 400 nm, 500 nm, etc. In the embodiments, if the thickness of the carbon coating layer 13 is too large, the content of the carbon element in the negative electrode active particle 100 is too high, and the proportion of silicon decreases, thereby reducing the specific capacity of the negative electrode active particle 100. If the thickness of the carbon coating layer 13 is too small, the coating of the porous skeleton 11 by the carbon coating layer 13 is incomplete, which easily causes incomplete isolation of the silicon particles 12 from the electrolyte, increases side reactions, and reduces the cycle capacity retention rate of the negative electrode active particle 100.

Further, the thickness of the carbon coating layer 13 ranges from 2 nm to 400 nm. In this case, the negative electrode active particle 100 can have both a high specific capacity and a high cycle capacity retention rate.

Still further, the thickness of the carbon coating layer 13 ranges from 2 nm to 300 nm. In this case, the negative electrode active particle 100 can have both a higher specific capacity and a higher cycle capacity retention rate.

Still further, the thickness of the carbon coating layer 13 ranges from 5 nm to 100 nm. In this way, the negative electrode active particle 100 can have both a higher specific capacity and a higher cycle capacity retention rate.

In some embodiments, the mass fraction of the silicon element in the negative electrode active particle 100 ranges from 5 wt% to 95 wt%. Further, the mass fraction of the silicon element in the negative electrode active particle 100 ranges from 10 wt% to 85 wt%. Still further, the mass fraction of the silicon element in the negative electrode active particle 100 ranges from 15 wt% to 80 wt%. Still further, the mass fraction of the silicon element in the negative electrode active particle 100 ranges from 25 wt% to 70 wt%. Still further, the mass fraction of the silicon element in the negative electrode active particle 100 ranges from 30 wt% to 60 wt%. Specifically, the mass fraction of the silicon element in the negative electrode active particle 100 may be, but not limited to, 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, 95 wt%, etc.

It can be understood that, in the negative electrode active particle 100, the mass fraction of elements other than the silicon element (i.e., other elements) ranges from 5 wt% to 95 wt%.

It can be understood that, in some embodiments, not all of the silicon element is present in the negative electrode active particle 100 in the form of silicon particles 12, and not all of the silicon particles 12 used include only the silicon element.

In some implementations, the negative electrode active particle 100 includes the silicon element and other elements, and the other elements may be, but not limited to, at least one of carbon, nitrogen, oxygen, fluorine, chlorine, phosphorus, sulfur, titanium, zirconium, vanadium, molybdenum, tungsten, aluminum, iron, and the like.

In the embodiments, if the mass fraction of the silicon element is too low, the mass fraction of other elements is too high, meaning that the negative electrode active particle 100 contains too little active material, reducing the specific capacity of the negative electrode active particle 100. If the mass fraction of the silicon element is too high, the mass fraction of other elements is too low, and during lithium intercalation of the negative electrode active particle 100, the porous skeleton 11 is insufficient to support the expansion of the silicon particles 12, making the negative electrode active particle 100 prone to cracking, which affects the cycling performance of the battery using the negative electrode active particle 100.

In some embodiments, the median particle size D50 of the negative electrode active particle 100 is in a range of 1 µm ≤ D50 ≤ 20 µm.

Specifically, the median particle size D50 of the negative electrode active particle 100 may be, but not limited to, 1 µm, 3 µm, 5 µm, 7 µm, 10 µm, 13 µm, 15 µm, 18 µm, 20 µm, etc.

In the embodiments, if the median particle size D50 of the negative electrode active particle 100 is too large, when the negative electrode active particle 100 is applied to a lithium battery, the transmission path of lithium ions within the negative electrode active particle 100 is lengthened, increasing the transfer impedance of lithium ions, and resulting in poor kinetics. If the median particle size D50 of the negative electrode active particle 100 is too small, the specific surface area of the negative electrode active particle 100 increases, the contact area between the negative electrode active particle 100 and the electrolyte increases, and SEI films are increased. During the charge-discharge cycling of the battery, the repeated destruction and growth of the SEI films consume more electrolyte, easily reducing the cycle capacity retention rate of the battery. When the median particle size D50 of the negative electrode active particle 100 is in a range of 1 µm ≤ D50 ≤ 20 µm, the negative electrode active particle 100 can have both good kinetic performance and a high cycle capacity retention rate.

Further, the median particle size D50 of the negative electrode active particle 100 is in a range of 3 µm ≤ D50 ≤ 15 µm. When the median particle size of the negative electrode active particle 100 is in this range, the negative electrode active particle 100 can have both good kinetic performance and a high cycle capacity retention rate.

Further, the median particle size D50 of the negative electrode active particle 100 is in a range of 5 µm ≤ D50 ≤ 12 µm. When the median particle size of the negative electrode active particle 100 is in this range, the negative electrode active particle 100 can have both good kinetic performance and a higher cycle capacity retention rate.

In some implementations, the specific surface area S of the negative electrode active particle 100 is in a range of 0.1 m²/g ≤ S ≤ 30 m²/g. Specifically, the specific surface area S of the negative electrode active particle 100 may be, but not limited to, 0.1 m²/g, 0.3 m²/g, 0.5 m²/g, 0.8 m²/g, 1 m²/g, 3 m²/g, 5 m²/g, 8 m²/g, 10 m²/g, 12 m²/g, 14 m²/g, 16 m²/g, 18 m²/g, 20 m²/g, 22 m²/g, 24 m²/g, 26 m²/g, 28 m²/g, 30 m²/g, etc. When the specific surface area of the negative electrode active particle 100 is relatively small, the contact area between the negative electrode active particle 100 and the electrolyte may be better reduced, avoiding excessive consumption of the electrolyte during cycling which reduces the cycle capacity retention rate of the negative electrode particles. However, when the specific surface area of the negative electrode active particle 100 is too small, the size of the negative electrode active particle 100 is relatively large, and the large size increases the transmission path of lithium ions within the negative electrode active particle 100, increasing the transfer impedance of lithium ions, resulting in poor kinetic performance of the negative electrode active particle 100. If the specific surface area of the negative electrode active particle 100 is too large, when the negative electrode active particle 100 is applied to a battery, the contact area between the negative electrode active particle 100 and the electrolyte increases, the SEI films are increased, and the repeated destruction and growth of the SEI films consume more electrolyte during the charge-discharge cycling of the battery, easily reducing the cycle capacity retention rate of the battery.

It should be noted that, unless otherwise specified, the "specific surface area" in the disclosure is the BET specific surface area, i.e., the total area per unit mass of the material. "BET" is the combination of the initials of the three scientists Brunauer, Emmett, and Teller.

Further, the specific surface area S of the negative electrode active particle 100 is in a range of 1 m²/g ≤ S ≤ 20 m²/g. In this case, the negative electrode active particle 100 can have a high cycle capacity retention rate.

Still further, the specific surface area S of the negative electrode active particle 100 is in a range of 1 m²/g ≤ S ≤ 10 m²/g. In this case, the negative electrode active particle 100 can have a higher cycle capacity retention rate.

In some implementations, the compaction density of the negative electrode active particle 100 under a pressure of 2 tons ranges from 0.6 g/cm³ to 1.3 g/cm³. Specifically, the compaction density of the negative electrode active particle 100 under a pressure of 2 tons may be, but not limited to, 0.6 g/cm³, 0.7 g/cm³, 0.8 g/cm³, 0.9 g/cm³, 1.0 g/cm³, 1.1 g/cm³, 1.2 g/cm³, 1.3 g/cm³, etc. If the compaction density of the negative electrode active particle 100 under a pressure of 2 tons is too small, when the negative electrode active particle 100 is made into a negative electrode plate, the energy density of the negative electrode plate is reduced. If the compaction density of the negative electrode active particle 100 under a pressure of 2 tons is too large, when the negative electrode active particle 100 is made into a negative electrode plate, the transmission rate of ions in the negative electrode plate is reduced, thereby reducing the kinetic performance of the negative electrode plate. In addition, if the compaction density of the negative electrode active particle 100 under a pressure of 2 tons is too large, the void space in the negative electrode plate is too small, increasing the expansion rate of the negative electrode plate and reducing the cycling performance of the negative electrode plate.

In some embodiments, the first-cycle lithium intercalation specific capacity of the negative electrode active particle 100 ranges from 1700 mAh/g to 2000 mAh/g. Specifically, the first-cycle lithium intercalation specific capacity of the negative electrode active particle 100 may be, but not limited to, 1700 mAh/g, 1750 mAh/g, 1800 mAh/g, 1850 mAh/g, 1900 mAh/g, 1950 mAh/g, 2000 mAh/g, etc.

In some embodiments, the first-cycle lithium deintercalation specific capacity of the negative electrode active particle 100 ranges from 1600 mAh/g to 1900 mAh/g. Specifically, the first-cycle lithium deintercalation specific capacity of the negative electrode active particle 100 may be, but not limited to, 1600 mAh/g, 1650 mAh/g, 1700 mAh/g, 1750 mAh/g, 1800 mAh/g, 1850 mAh/g, 1900 mAh/g, etc.

The negative electrode active particle 100 of the embodiments of the disclosure may be prepared by the method(s) described in the following embodiments of the disclosure, and may also be prepared by other methods. The preparation methods of the embodiments of the disclosure are merely one or more preparation methods for the negative electrode active particle 100 of the disclosure, and should not be construed as limiting the negative electrode active particle 100 provided in the embodiments of the disclosure.

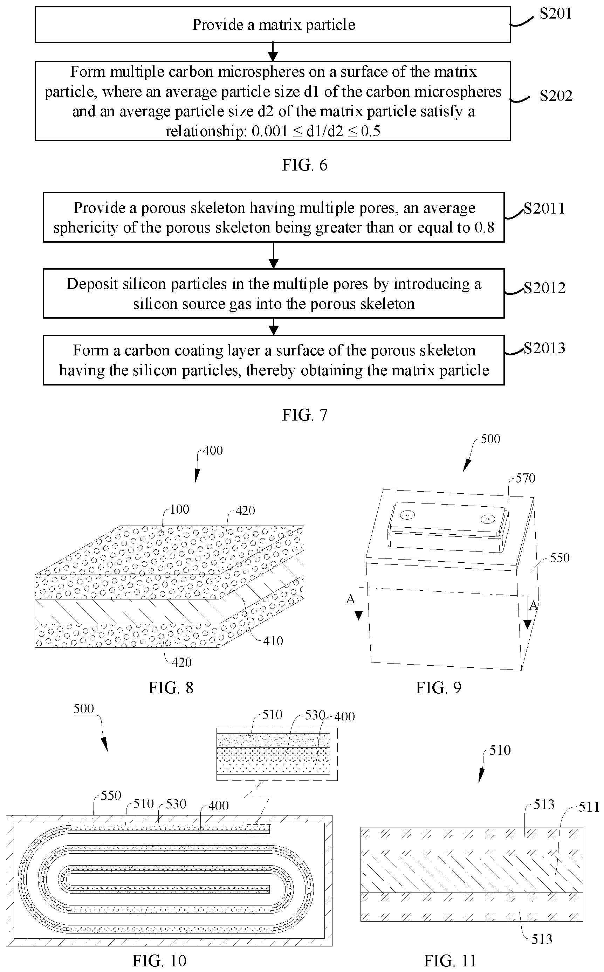

Referring to FIG. 6, the embodiments of the disclosure provide a method for preparing a negative electrode active particle 100, which includes operations S201 and S202.

S201, a matrix particle 10 is provided.

For detailed descriptions of the matrix particle 10, reference may be made to the corresponding parts of the above embodiments, which will not be repeated here.

S202, a plurality of carbon microspheres 20 are formed on a surface of the matrix particle 10, where an average particle size d1 of the carbon microspheres 20 and an average particle size d2 of the matrix particle 10 satisfy a relationship: 0.001 ≤ d1/d2 ≤ 0.5.

For detailed descriptions of the carbon microspheres 20, reference may be made to the corresponding parts of the above embodiments, which will not be repeated here.

The negative electrode active particle 100 prepared by the method for preparing a negative electrode active particle according to the embodiments of the disclosure includes the matrix particle 10 and the plurality of carbon microspheres 20. The plurality of carbon microspheres 20 are distributed on the surface of the matrix particle 10. The average particle size d1 of the carbon microspheres 20 and the average particle size d2 of the matrix particle 10 satisfy the relationship: 0.001 ≤ d1/d2 ≤ 0.5. In this way, a suitable concave-convex structure can be formed on the surface of the negative electrode active particle 100, which can intertwine and interlock with the binder and the negative electrode conductive agent in a negative electrode active layer of a negative electrode plate when the negative electrode active particle is applied to the negative electrode active layer, thereby reducing the detachment of the negative electrode active particle 100 from the negative electrode binder and the negative electrode conductive agent and the loss of the conductive network, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

Referring to FIG. 7, in some embodiments, the providing a matrix particle 10 in S201 includes S2011 to S2013.

S2011, a porous skeleton 11 is provided, the porous skeleton 11 having a plurality of pores 111, and an average sphericity of the porous skeleton 11 being greater than or equal to 0.8.

For detailed descriptions of the porous skeleton 11, pores 111, and other features, reference may be made to the corresponding parts of the above embodiments, which will not be repeated here.

S2012, silicon particles 12 are deposited in the plurality of pores 111 by introducing a silicon source gas into the porous skeleton 11.

In some embodiments, the depositing silicon particles 12 in the plurality of pores 111 by introducing a silicon source gas into the porous skeleton 11 includes: depositing silicon particles 12 in the plurality of pores 111 by introducing a silicon source gas at a first temperature T1, the first temperature T1 is in a range of 400°C ≤ T1 ≤ 700°C, and a ratio m/V' of a mass m of the silicon source gas to a total volume V' of the plurality of pores 111 of the porous skeleton 11 is in a range of 0.05 g/cm³ ≤ m/V' ≤ 2.0 g/cm³.

It should be noted that "the total volume V' of the plurality of pores 111 of the porous skeleton 11" refers to the sum of the volumes of the pores 111 of all porous skeletons 11 in the reaction system. For example, the total volume V' of the plurality of pores 111 of the porous skeleton 11 = weight m of the porous skeleton 11 participating in the reaction × pore volume V of the porous skeleton 11, that is, V' = mV.

In some implementations, the silicon source gas may include, but is not limited to, at least one of silane, disilane, dichlorosilane, trichlorosilane, and the like.

In some implementations, before the silicon source gas is introduced into the porous skeleton 11, the silicon source gas may be mixed with a protective gas, and then the mixed gas is introduced; alternatively, the protective gas may be introduced simultaneously with the silicon source gas.

In some implementations, the protective gas may be, but not limited to, at least one of argon, nitrogen, and the like.

Specifically, the first temperature T1 may be, but not limited to, 400°C, 430°C, 450°C, 480°C, 500°C, 530°C, 550°C, 580°C, 600°C, 630°C, 650°C, 680°C, 700°C, etc. If the first temperature T1 is too high, the reaction rate of the silicon source gas is too fast, and the silicon source gas begins to deposit before it enters the pores 111 of the porous skeleton 11. The deposition of silicon on the surface of the porous skeleton 11 causes expansion of silicon not to be constrained by the space of the porous skeleton 11 during lithium intercalation of the negative electrode active particle 100, increasing the expansion rate of the entire negative electrode active particle 100, and deteriorating the cycling performance of the battery using the negative electrode active particle 100. In addition, the deposition of silicon on the surface allows the size of silicon to grow continuously without being limited by the size of the pores 111 in the porous skeleton 11. Excessively large silicon size leads to the generation of a Li₁₅Si₄ phase during lithium intercalation, which further deteriorates the cycling performance of the battery using the negative electrode active particle 100. If the first temperature T1 is too low, the silicon source gas is difficult to decompose into silicon and difficult to deposit, and it is impossible to form the silicon particles 12 in the pores 111 of the porous skeleton 11.

Specifically, the ratio m/V' of the mass m of the silicon source gas to the total volume V' of the plurality of pores 111 of the porous skeleton 11 may be, but not limited to, 0.05 g/cm³, 0.08 g/cm³, 0.1 g/cm³, 0.15 g/cm³, 0.2 g/cm³, 0.25 g/cm³, 0.3 g/cm³, 0.4 g/cm³, 0.5 g/cm³, 0.6 g/cm³, 0.8 g/cm³, 1.0 g/cm³, 1.2 g/cm³, 1.4 g/cm³, 1.6 g/cm³, 1.8 g/cm³, 1.9 g/cm³, 2.0 g/cm³, etc. If the ratio m/V' of the mass m of the silicon source gas to the total volume V' of the plurality of pores 111 of the porous skeleton 11 is too small, the energy density of the prepared negative electrode active particle 100 is too low. If the ratio m/V' of the mass m of the silicon source gas to the total volume V' of the plurality of pores 111 of the porous skeleton 11 is too large, the mass fraction of silicon in the prepared negative electrode active particle 100 is too high, which increases the expansion rate of the negative electrode active particle 100. In this case, during lithium intercalation of the negative electrode active particle 100, the porous skeleton 11 is insufficient to support the expansion of the silicon particles 12, making the negative electrode active particle 100 prone to cracking, which affects the cycling performance of the battery using the negative electrode active particle 100. When the ratio m/V' of the mass m of the silicon source gas to the total volume V' of the plurality of pores 111 of the porous skeleton 11 is in a range of 0.05 g/cm³ ≤ m/V' ≤ 2 g/cm³, the negative electrode active particle 100 can have a high energy density while having a low expansion rate, thereby enabling the battery using the negative electrode active particle 100 to have good cycling performance.

Further, the ratio m/V' of the mass m of the silicon source gas to the total volume V' of the plurality of pores 111 of the porous skeleton 11 is in a range of 0.2 g/cm³ ≤ m/V' ≤ 1.8 g/cm³. In this case, the negative electrode active particle 100 can have a higher energy density while having a lower expansion rate, thereby enabling the battery using the negative electrode active particle 100 to have better cycling performance.

Still further, the ratio m/V' of the mass m of the silicon source gas to the total volume V' of the plurality of pores 111 of the porous skeleton 11 is in a range of 0.5 g/cm³ ≤ m/V' ≤ 1.8 g/cm³. In this case, the negative electrode active particle 100 can have a higher energy density while having a lower expansion rate, thereby enabling the battery using the negative electrode active particle 100 to have better cycling performance.

In some implementations, the deposition time t of the silicon particles 12 is in a range of 3 h ≤ t ≤ 100 h. Specifically, the deposition time t of the silicon particles 12 may be, but not limited to, 3 h, 5 h, 8 h, 10 h, 15 h, 20 h, 25 h, 30 h, 35 h, 40 h, 50 h, 60 h, 70 h, 80 h, 90 h, 100 h, etc. If the deposition time t of the silicon particles 12 is too long, the growth of the silicon particles 12 is easily excessive, resulting in excessively large silicon particles 12 and excessively large silicon phase size in the negative electrode active particle 100, thereby making the negative electrode active particle 100 more prone to generating the Li₁₅Si₄ crystalline phase during lithium intercalation. During the formation of the crystalline phase, the negative electrode active particle 100 leads to higher internal stress and greater volume changes, deteriorating the cycling performance of the negative electrode active particle 100. If the deposition time t of the silicon particles 12 is too short, the silicon content in the negative electrode active particle 100 is reduced, reducing the specific capacity of the negative electrode active particle 100.

S2013, a carbon coating layer 13 is formed on a surface of the porous skeleton 11 having the silicon particles 12, thereby obtaining the matrix particle 10.

The matrix particle 10 includes the porous skeleton 11, the silicon particles 12, and the carbon coating layer 13. The silicon particles 12 are located in the plurality of pores 111, and there is a gap between each silicon particle 12 and the inner wall of the respective pore 111. The carbon coating layer 13 wraps around an outer periphery of the porous skeleton 11 to close the gaps, thereby forming closed pores 14 from the gaps.

In some implementations, the forming the carbon coating layer 13 on the surface of the porous skeleton 11 having the silicon particles 12 includes: forming the carbon coating layer 13 on the surface of the porous skeleton 11 having the silicon particles 12, in a first organic carbon source at a second temperature T2, the second temperature T2 being in a range of 500°C ≤ T2 ≤ 900°C.

In some implementations, the first organic carbon source is added to the porous skeleton 11 having the silicon particles 12, and chemical vapor deposition (i.e., carbon deposition) is performed at 500°C to 900°C, thereby forming the carbon coating layer 13 on the surface of the porous skeleton 11 having the silicon particles 12.

In some implementations, the first organic carbon source includes a first organic gas and a first carrier gas. The first organic gas may be, but not limited to, at least one of acetylene, methane, and the like. The first carrier gas may be, but not limited to, at least one of nitrogen, argon, and the like.

In some implementations, the volume concentration V1 of the first organic gas in the first organic carbon source ranges from 1% to 50%. Specifically, the volume concentration V1 of the first organic gas in the first organic carbon source may be, but not limited to, 1%, 3%, 5%, 7%, 10%, 15%, 20%, 25%, 30%, 35%, 40%, 45%, 50%, etc. If the volume concentration V1 of the first organic gas in the first organic carbon source is too low, the formation rate of the carbon coating layer 13 is reduced, reducing production efficiency. If the volume concentration V1 of the first organic gas in the first organic carbon source is too high, the rate of carbon deposition is too fast, resulting in non-uniform carbon deposition, which cannot effectively close the silicon particles 12 in the pores 111 of the porous skeleton 11.

In some implementations, the second temperature T2 may be, but not limited to, 500°C, 550°C, 600°C, 650°C, 700°C, 750°C, 800°C, 850°C, 900°C, etc. If the second temperature T2 is too low, the first organic carbon source is difficult to reduce. If the second temperature T2 is too high, the carbon deposition is too fast, easily resulting in a non-uniform carbon coating layer 13, making it difficult to completely close the silicon particles 12 in the pores 111 of the porous skeleton 11, increasing side reactions of the silicon particles 12, and reducing the cycling performance of the negative electrode active particle 100. In addition, if the second temperature T2 is too high, inert silicon carbide is easily generated, reducing the energy density of the negative electrode active particle 100.

In some implementations, the deposition time of the carbon coating layer 13 may range from 1 min to 3 h, for example, 1 min, 20 min, 30 min, 45 min, 1 h, 1.5 h, 2 h, 2.5 h, 3 h, etc. If the deposition time of the carbon coating layer 13 is too short, the first organic carbon source is difficult to reduce, and the carbon coating layer 13 cannot completely cover the porous skeleton 11, which exposes some silicon particles 12, thereby increasing side reactions between the negative electrode active particle 100 and the electrolyte. If the deposition time of the carbon coating layer 13 is too long, inert silicon carbide is easily generated, and the formed carbon coating layer 13 is too thick, reducing the energy density of the negative electrode active particle 100.

Further, the deposition time of the carbon coating layer 13 may range from 1 h to 3 h. In this case, the formed carbon coating layer 13 can better close the pores 111 or gaps, and the negative electrode active particle 100 can have a high energy density.

For detailed descriptions of the porous skeleton 11, silicon particles 12, carbon coating layer 13, pores 111, gaps, and closed pores 14, reference may be made to the corresponding parts of the above embodiments, which will not be repeated here.

In some embodiments, the forming a plurality of carbon microspheres 20 on the surface of the matrix particle 10 in S202 includes: forming a plurality of carbon microspheres 20 on the surface of the matrix particle 10 by placing the matrix particle 10 in a second organic carbon source at a third temperature T3, the third temperature T3 being in a range of 300°C ≤ T3 ≤ 900°C.

In some embodiments, the second organic carbon source may be an organic carbon source solution. The organic carbon source solution includes at least one of a glucose solution, a fructose solution, a lactose solution, a citric acid solution, a sucrose solution, and the like.

In some other embodiments, the second organic carbon source includes a second organic gas and a second carrier gas. In some implementations, the second organic gas may be, but not limited to, at least one of acetylene, methane, and the like. The second carrier gas may be, but not limited to, at least one of nitrogen, argon, and the like.

Further, when the second organic carbon source includes the second organic gas and the second carrier gas, the third temperature T3 for depositing the carbon microspheres 20 is in a range of 500°C ≤ T3 ≤ 900°C. When the second organic carbon source includes the organic carbon source solution, the third temperature T3 for forming the carbon microspheres 20 is in a range of 300°C ≤ T3 ≤ 900°C. That is, the organic carbon source is carbonized at the third temperature to form the carbon microspheres 20.

In some implementations, the third temperature T3 may be, but not limited to, 300°C, 350°C, 400°C, 450°C, 500°C, 550°C, 600°C, 650°C, 700°C, 750°C, 800°C, 850°C, 900°C, etc. If the third temperature T3 is too low, the second organic carbon source is difficult to reduce or carbonize to form the carbon microspheres 20. In addition, if the third temperature is too low and the second organic carbon source includes the second organic gas, the second organic carbon source tends to form a coating layer after deposition, making it difficult to form the carbon microspheres 20. If the third temperature T3 is too high, inert silicon carbide is easily generated, reducing the energy density of the negative electrode active particle 100.

In some implementations, the volume concentration V2 of the second organic gas in the second organic carbon source ranges from 5% to 100%. Specifically, the volume concentration V2 of the second organic gas in the second organic carbon source may be, but not limited to, 5%, 7%, 10%, 15%, 20%, 25%, 30%, 35%, 40%, 45%, 50%, 60%, 70%, 80%, 90%, 100%, etc. If the volume concentration V2 of the second organic gas in the second organic carbon source is too low, the rate of carbon deposition is reduced, making it difficult to form non-uniformly deposited carbon microspheres 20 on the surface of the carbon coating layer 13.

In some implementations, the deposition time of the carbon microspheres 20 may range from 1 min to 3 h, for example, 1 min, 20 min, 30 min, 45 min, 1 h, 1.5 h, 2 h, 2.5 h, 3 h, etc. If the deposition time of the carbon microspheres 20 is too short, the first organic carbon source is difficult to reduce, and the carbon microspheres 20 cannot completely cover the porous skeleton 11, which exposes some silicon particles 12, thereby increasing side reactions between the negative electrode active particle 100 and the electrolyte. If the deposition time of the carbon microspheres 20 is too long, inert silicon carbide is easily generated, and the formed carbon microspheres 20 are too thick, reducing the energy density of the negative electrode active particle 100.

Further, the deposition time of the carbon microspheres 20 may range from 1 h to 3 h. In this case, the formed carbon microspheres 20 can better close the pores 111 or gaps, and the negative electrode active particle 100 can have a high energy density.

In some embodiments, the first organic carbon source includes a first organic gas and a first carrier gas, the second organic carbon source includes a second organic gas and a second carrier gas, the second temperature T2 is lower than the third temperature T3, and the volume concentration of the first organic gas in the first organic carbon source is lower than the volume concentration of the second organic gas in the second organic carbon source.

In the embodiments, by making the second temperature T2 lower than the third temperature T3 and making the volume concentration of the first organic gas in the first organic carbon source lower than the volume concentration of the second organic gas in the second organic carbon source, when chemical vapor deposition is performed using the first organic carbon source, the deposition rate of carbon is slower, so that the carbon deposition can be more uniform, better closing the pores 111 in the porous skeleton 11, and thus better forming the carbon coating layer 13 on the surface of the porous skeleton 11. When chemical vapor deposition is performed using the second organic carbon source, the deposition rate of carbon is faster, so that individual carbon microspheres 20 can be formed on the surface of the carbon coating layer 13, and a concave-convex structure is formed on the surface of the negative electrode active particle 100, which can intertwine and interlock with the binder and the negative electrode conductive agent in a negative electrode active layer of a negative electrode plate when the negative electrode active particle is applied to the negative electrode active layer, thereby reducing the detachment of the negative electrode active particle 100 from the negative electrode binder and the negative electrode conductive agent and the loss of the conductive network, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

In some embodiments, a difference T3-T2 between the third temperature T3 and the second temperature T2 is in a range of 20°C ≤ T3-T2 ≤ 250°C.

Alternatively, a difference V2-V1 between the volume concentration V2 of the second organic gas in the second organic carbon source and the volume concentration V1 of the first organic gas in the first organic carbon source is in a range of 5% ≤ V2-V1 ≤ 99%.

Alternatively, the difference T3-T2 between the third temperature T3 and the second temperature T2 is in a range of 20°C ≤ T3-T2 ≤ 250°C, and the difference V2-V1 between the volume concentration V2 of the second organic gas in the second organic carbon source and the volume concentration V1 of the first organic gas in the first organic carbon source is in a range of 5% ≤ V2-V1 ≤ 99%.

Specifically, the difference T3-T2 between the third temperature T3 and the second temperature T2 may be, but not limited to, 20°C, 30°C, 50°C, 80°C, 100°C, 130°C, 150°C, 180°C, 200°C, 230°C, 250°C, etc. If the difference T3-T2 between the third temperature T3 and the second temperature T2 is too small, when both the third temperature T3 and the second temperature T2 are relatively low, the deposition of the carbon microspheres 20 may fail to produce the carbon microspheres 20; and when both the third temperature T3 and the second temperature T2 are relatively high, the deposition of the carbon coating layer 13 may be too fast due to the high deposition rate of carbon, easily resulting in a non-uniform carbon coating layer 13, making it difficult to completely close the silicon particles 12 in the pores 111 of the porous skeleton 11, increasing side reactions of the silicon particles 12, and reducing the cycling performance of the negative electrode active particle 100. In addition, if the second temperature T2 is too high, inert silicon carbide is easily generated, reducing the energy density of the negative electrode active particle 100. If the difference T3-T2 between the third temperature T3 and the second temperature T2 is too large, during the deposition of the silicon particles 12, inert silicon carbide is easily generated, reducing the energy density of the negative electrode active particle 100.

Specifically, the difference V2-V1 between the volume concentration V2 of the second organic gas in the second organic carbon source and the volume concentration V1 of the first organic gas in the first organic carbon source may be, but not limited to, 5%, 7%, 10%, 15%, 20%, 25%, 30%, 35%, 40%, 45%, 50%, 60%, 70%, 80%, 90%, 99%, etc. If the difference V2-V1 between the volume concentration V2 of the second organic gas in the second organic carbon source and the volume concentration V1 of the first organic gas in the first organic carbon source is too small, it is possible that both the volume concentration V2 of the second organic gas in the second organic carbon source and the volume concentration V1 of the first organic gas in the first organic carbon source are relatively high, in this case, during the deposition of the carbon coating layer 13, the deposition rate of the carbon coating layer 13 is too high, thereby reducing the uniformity of the deposition of the carbon coating layer 13 and reducing the cycling performance of the negative electrode active particle 100; alternatively, it is possible that both the volume concentration V2 of the second organic gas in the second organic carbon source and the volume concentration V1 of the first organic gas in the first organic carbon source are relatively low, which reduces the production efficiency of the negative electrode active particle 100. If the difference V2-V1 between the volume concentration V2 of the second organic gas in the second organic carbon source and the volume concentration V1 of the first organic gas in the first organic carbon source is too large, the volume concentration V1 of the first organic gas in the first organic carbon source may be too low, which reduces the production efficiency of the negative electrode active particle 100.

Referring to FIG. 3 again, the embodiments of the disclosure further provide a negative electrode active particle 100 including a matrix particle 10. The matrix particle 10 includes a porous skeleton 11, silicon particles 12, and a carbon coating layer 13. The porous skeleton 11 has a plurality of pores 111. The silicon particles 12 are located in the plurality of pores 111, and there is a gap between each silicon particles 12 and the inner wall of the respective pore 111. The carbon coating layer 13 wraps around an outer periphery of the porous skeleton 11 to close the gap, thereby forming closed pores 14 from the gaps.

An average sphericity of the matrix particle 10 is greater than or equal to 0.8. An average mass fraction of the silicon particles 12 in a negative electrode active material composed of a plurality of the negative electrode active particles 100 is A, and the mass fraction of silicon particles 12 in each of 80% or more of the negative electrode active particles 100 ranges from A-10 wt% to A+10 wt%.

For detailed descriptions of the negative electrode active particle 100, the matrix particle 10, the porous skeleton 11, the silicon particles 12, the carbon coating layer 13, the pores 111, the closed pores 14, and other aspects, reference may be made to the corresponding parts of the above embodiments, which will not be repeated here.

In some implementations, the average sphericity of the matrix particle 10 is greater than or equal to 0.8. Specifically, the sphericity of the porous skeleton 11 may be, but not limited to, 0.8, 0.82, 0.84, 0.86, 0.88, 0.9, 0.92, 0.94, 0.96, 0.98, 1.0, etc. If the sphericity of the matrix particle 10 is too small, the anisotropy of the matrix particle 10 increases, which increases the anisotropic expansion of the matrix particle 10 during lithium intercalation of the silicon particles 12, and reduces the cycling performance of the negative electrode active particle 100. When the average sphericity of the matrix particle 10 is greater than or equal to 0.8, the isotropy of the matrix particle 10 can be improved, so that during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing the expansion rate of the matrix particle 10, reducing damage to the negative electrode active particle 100 during lithium intercalation, and improving the cycling performance of the negative electrode active particle 100.

In some implementations, the average sphericity of the porous skeleton 11 is greater than or equal to 0.8. Specifically, the sphericity of the porous skeleton 11 may be, but not limited to, 0.8, 0.82, 0.84, 0.86, 0.88, 0.9, 0.92, 0.94, 0.96, 0.98, 1.0, etc. If the sphericity of the porous skeleton 11 is too low, the uniformity of distribution of the silicon particles 12 and the uniformity of the size of the silicon particles 12 during silicon deposition in the porous skeleton 11 are reduced, thereby causing the anisotropy of the porous skeleton 11 to be more obvious. This causes the anisotropic expansion rates of the negative electrode active particle 100 to vary greatly during lithium intercalation of the negative electrode active particle, thereby reducing the cycle capacity retention rate of the battery using the negative electrode active particle 100. The better the sphericity of the porous skeleton 11, the more conducive it is to improving the transmission of the silicon source gas in the porous skeleton 11 during silicon deposition, so that the silicon source gas is more uniformly deposited in the plurality of pores 111 of the porous skeleton 11, and the silicon particles 12 can be more uniformly deposited, improving the uniformity of distribution of the silicon particles 12 in the porous skeleton 11 and the uniformity of the size of the silicon particles 12. Thus, during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing damage to the negative electrode active particle 100 during lithium intercalation and improving the cycling performance of the negative electrode active particle 100.

In addition, in the embodiments, by making the mass fraction of silicon particles 12 in each of more than 80% of the negative electrode active particles 100 within the range of ±10 wt%, the mass fraction of silicon particles 12 in each negative electrode active particle 100 is more balanced, so that the expansion rates of the individual negative electrode active particles 100 are close to each other during lithium intercalation of the negative electrode active particles 100, thereby avoiding excessively high content of silicon particles 12 and excessively large expansion rates in some negative electrode active particles 100, and thus enabling the negative electrode active particles 100 to have a higher cycle capacity retention rate.

In some embodiments, the closed pores 14 and the silicon particles 12 satisfy a relationship 0.5 ≤ Ia/Ib ≤ 0.95, where Ia is the minimum diffraction intensity in a range of 2θ from 8.8° to 22° in the X-ray diffraction pattern of the negative electrode active particle 100, Ib is the intensity of the Si(111) diffraction peak at 2θ from 28.2° to 28.5° in the X-ray diffraction pattern of the negative electrode active particle 100, and 2θ is the diffraction angle.

Specifically, Ia/Ib may be, but not limited to, 0.5, 0.52, 0.55, 0.58, 0.6, 0.62, 0.65, 0.68, 0.7, 0.73, 0.75, 0.78, 0.8, 0.83, 0.85, 0.88, 0.9, 0.92, 0.95, etc. If Ia/Ib is too small, the content of closed pores 14 is too small. In this case, when the negative electrode active particle 100 is applied to a battery and the battery is charged and discharged, the closed pores 14 are insufficient to buffer the expansion of the silicon particles 12 during lithium intercalation, thereby increasing the expansion rate of the negative electrode active particle 100, and making the negative electrode active particle 100 prone to cracking. This further causes the repeated generation of new SEI films on the surface of the negative electrode active particle 100, increasing the rate of electrolyte consumption, and reducing the cycle capacity retention rate of the battery. If Ia/Ib is too large, the content of closed pores 14 is too large, which reduces the energy density of the negative electrode active particle 100.

For detailed descriptions of the closed pores 14, the silicon particles 12 and other aspects, reference may be made to the corresponding parts of the above embodiments, which will not be repeated here.

In some embodiments, the mass fraction of the silicon particles 12 in the negative electrode active particle 100 ranges from 20 wt% to 80 wt%. Specifically, the mass fraction of the silicon particles 12 in the negative electrode active particle 100 may be, but not limited to, 20 wt%, 25 wt%, 30 wt%, 35 wt%, 40 wt%, 50 wt%, 60 wt%, 70 wt%, 80 wt%, etc. In the embodiments, if the mass fraction of the silicon particles 12 is too low, the negative electrode active particle 100 contains too little active material, reducing the specific capacity of the negative electrode active particle 100. If the mass fraction of the silicon particles 12 is too high, during lithium intercalation of the negative electrode active particle 100, the porous skeleton 11 is insufficient to support the expansion of the silicon particles 12, making the negative electrode active particle 100 prone to cracking, which affects the cycling performance of the battery using the negative electrode active particle 100.

In some implementations, 90 wt% or more of the silicon particles 12 are distributed in the plurality of pores 111. It can be understood that most of the silicon element or silicon particles 12 in the negative electrode active particle 100 are distributed within the porous skeleton 11, and the content of silicon particles 12 outside the porous skeleton 11 is less than 10 wt%. Specifically, 90 wt% or more of the silicon particles 12 may be distributed in the plurality of pores 111; alternatively, 93 wt% or more of the silicon particles 12 may be distributed in the plurality of pores 111; alternatively, 95 wt% or more of the silicon particles 12 may be distributed in the plurality of pores 111; alternatively, 98 wt% or more of the silicon particles 12 may be distributed in the plurality of pores 111; alternatively, 100 wt% of the silicon particles 12 may be distributed in the plurality of pores 111, etc. When a silicon particle 12 is distributed outside the porous skeleton 11, it is not constrained by the porous skeleton 11 during lithium intercalation. Therefore, the more silicon particles 12 distributed outside the porous skeleton 11, the higher the expansion rate of the negative electrode active particle 100 during lithium intercalation. When 90 wt% or more of the silicon particles 12 are distributed in the plurality of pores 111, the expansion rate of the negative electrode active particle 100 during lithium intercalation can be better reduced, thereby improving the cycle capacity retention rate of the negative electrode active particle 100.

In some implementations, the mass fraction of the silicon element in the negative electrode active particle 100 ranges from 5 wt% to 95 wt%. Further, the mass fraction of the silicon element in the negative electrode active particle 100 ranges from 10 wt% to 85 wt%. Still further, the mass fraction of the silicon element in the negative electrode active particle 100 ranges from 15 wt% to 80 wt%. Still further, the mass fraction of the silicon element in the negative electrode active particle 100 ranges from 25 wt% to 70 wt%. Still further, the mass fraction of the silicon element in the negative electrode active particle 100 ranges from 30 wt% to 60 wt%. Specifically, the mass fraction of the silicon element in the negative electrode active particle 100 may be, but not limited to, 5 wt%, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, 95 wt%, etc.

For detailed descriptions of the negative electrode active particle 100, the silicon particles 12, the silicon element and other aspects, reference may be made to the corresponding parts of the above embodiments, which will not be repeated here.

In some embodiments, the porous skeleton 11 includes a carbon element and a second doping element. The second doping element includes at least one of nitrogen, oxygen, fluorine, chlorine, phosphorus, sulfur, silicon, titanium, zirconium, vanadium, molybdenum, tungsten, aluminum, and iron. The mass fraction of the carbon element in the porous skeleton 11 is greater than or equal to 80 wt%.

In some implementations, in the porous skeleton 11, the mass fraction of the carbon element ranges from 80 wt% to 100 wt%, and the mass fraction of the second doping element ranges from 0 to 20 wt%.

Specifically, the mass fraction of the carbon element in the porous skeleton 11 may be, but not limited to, 80 wt%, 82 wt%, 84 wt%, 86 wt%, 88 wt%, 90 wt%, 92 wt%, 94 wt%, 86wt%, 98 wt%, 100 wt%, etc.

Specifically, the mass fraction of the second doping element in the porous skeleton 11 may be, but not limited to, 0 wt%, 2 wt%, 4 wt%, 6 wt%, 8 wt%, 10 wt%, 12 wt%, 14 wt%, 16 wt%, 18 wt%, 20 wt%, etc.

In the embodiments, by doping the porous skeleton 11 with the second doping element, the porous skeleton 11 can have a high strength, which can better prevent the negative electrode active particle 100 from cracking during lithium intercalation, improving the cycle capacity retention rate of the battery using the negative electrode active particle 100. In addition, the second doping element can improve the electrical conductivity of the porous skeleton 11, improving the kinetic performance of the negative electrode active particle 100, thereby improving the kinetic performance of the battery using the negative electrode active particle 100.

In some other embodiments, the porous skeleton 11 may be at least one of porous carbide (e.g., titanium carbide, TiC), porous nitride, porous metal-organic compound, and the like. Using these compounds as the porous skeleton 11 can better suppress the expansion of the silicon particles 12 during lithium intercalation of the negative electrode active particle 100.

In some implementations, the porous carbide may be, but not limited to, at least one of VxC, TixC, SixC, WxC, TaxC, NbxC, ZrxC, BxC, MoxC, FexC, TixAlyC, TixSiyC, and the like.

In some implementations, the mass fraction of the carbon element in the porous carbide ranges from 5% to 99%. Specifically, the mass fraction of the carbon element in the porous carbide may be, but not limited to, 5%, 10%, 20%, 30%, 40%, 50%, 60%, 70%, 80%, 90%, 99%, etc.

In some implementations, the porous nitride may be, but not limited to, at least one of SixN, BxN, AlxN, TixN, GaxN, ZrxN, VxN, MoxN, WxN, and the like.

In some implementations, the mass fraction of the nitrogen element in the porous nitride ranges from 5% to 99%. Specifically, the mass fraction of the nitrogen element in the porous nitride may be, but not limited to, 5%, 10%, 20%, 30%, 40%, 50%, 60%, 70%, 80%, 90%, 99%, etc.

In some implementations, the porous metal-organic compound may be, but not limited to, at least one of a Zn-based metal-organic framework, a Ni-based metal-organic framework, a Mn-based metal-organic framework, a Cu-based metal-organic framework, and the like.

In some embodiments, the silicon particles 12 satisfy at least one of following conditions: the silicon particles 12 include a silicon element, and the mass fraction of the silicon element in the silicon particles 12 is greater than or equal to 50 wt%; and the silicon particles 12 further include a third doping element, the third doping element includes at least one of carbon, nitrogen, oxygen, fluorine, chlorine, phosphorus, sulfur, titanium, zirconium, vanadium, molybdenum, tungsten, aluminum, and iron, and the mass fraction of the third doping element in the silicon particles 12 is less than or equal to 50 wt%.

It can be understood that, in some embodiments, the silicon particles 12 include only the silicon element. In some other embodiments, the silicon particles 12 include the silicon element and the third doping element.

It can be understood that the mass fraction of the silicon element in the silicon particles 12 ranges from 50 wt% to 100 wt%, and the mass fraction of the third doping element in the silicon particles 12 ranges from 0 to 50 wt%.

Specifically, the mass fraction of the silicon element in the silicon particles 12 may be, but not limited to, 50 wt%, 52 wt%, 55 wt%, 60 wt%, 65 wt%, 70 wt%, 75 wt%, 80 wt%, 85 wt%, 90 wt%, 95 wt%, 100 wt%, etc.

Specifically, the mass fraction of the third doping element in the silicon particles 12 may be, but not limited to, 0, 1 wt%, 3 wt%, 5 wt%, 10 wt%, 15 wt%, 20 wt%, 25 wt%, 30 wt%, 35 wt%, 40 wt%, 45 wt%, 50 wt%, etc.

In the embodiments, doping with the oxygen element can alleviate the expansion of the matrix particle 10 during lithium intercalation of the negative electrode active particle 100, thereby reducing the expansion rate of the negative electrode active particle 100 and improving the cycling performance of the battery using the negative electrode active particle 100. Doping with sulfur, nitrogen, or phosphorus can improve the electrical conductivity of the negative electrode active particle 100, thereby improving the kinetic performance of the battery using the negative electrode active particle 100. Doping with lithium has a lithium-supplementing effect, which is beneficial for improving the initial coulombic efficiency of the battery using the negative electrode active particle 100. Aluminum, magnesium, titanium, sodium, copper, and iron can improve the electrical conductivity of the silicon particles 12, thereby improving the kinetic performance of the battery using the negative electrode active particle 100.

In some implementations, the sizes of the closed pores 14 are less than or equal to 4 nm. Specifically, the sizes of the closed pore 14 may be, but not limited to, less than or equal to 4.0 nm, less than or equal to 3.5 nm, less than or equal to 3 nm, less than or equal to 2.8 nm, less than or equal to 2.5 nm, less than or equal to 2.3 nm, less than or equal to 2 nm, less than or equal to 1.8 nm, less than or equal to 1.5 nm, less than or equal to 1.3 nm, less than or equal to 1 nm, less than or equal to 0.8 nm, less than or equal to 0.5 nm, etc. In the embodiments, if the sizes of the closed pores 14 are too small, when the negative electrode active particle 100 is applied to a battery and the battery is charged and discharged, the closed pores 14 are insufficient to buffer the expansion of the silicon particles 12 during lithium intercalation, thereby increasing the expansion rate of the negative electrode active particle 100, increasing the rate of electrolyte consumption, and reducing the cycle capacity retention rate of the battery. If the sizes of the closed pores 14 are too large, the energy density of the negative electrode active particle 100 is reduced.

In some implementations, the average particle size d3 of the silicon particles 12 is in a range of 0.4 nm ≤ d3 ≤ 4 nm. Specifically, the average particle size d3 of the silicon particles 12 may be, but not limited to, 0.4 nm, 0.5 nm, 0.6 nm, 0.7 nm, 0.8 nm, 0.9 nm, 1.0 nm, 1.1 nm, 1.2 nm, 1.3 nm, 1.4 nm, 1.5 nm, 1.6 nm, 1.7 nm, 1.8 nm, 1.9 nm, 2.0 nm, 2.3 nm, 2.5 nm, 2.8 nm, 3.0 nm, 3.3 nm, 3.5 nm, 3.8 nm, 4.0 nm, etc. If the average particle size of the silicon particles 12 is too small, the silicon is in an atomic state and cannot form a silicon phase, which reduces the intercalation of lithium ions, thereby reducing the specific capacity of the negative electrode active particle 100. If the average particle size of the silicon particles 12 is too large, during lithium intercalation of the negative electrode active particle 100, it is easy to generate a Li₁₅Si₄ crystalline phase. The occurrence of the phase transition leads to higher internal stress in the negative electrode active particle 100 and greater volume changes, thereby making the negative electrode active particle 100 more prone to cracking and reducing the cycle capacity retention rate of the negative electrode active particle 100. When the average particle size d3 of the silicon particles 12 is in a range of 0.4 nm ≤ d3 ≤ 4 nm, the silicon particles 12 have a sufficiently small size, so that the pressure on the silicon particles 12 during lithium intercalation and deintercalation is sufficiently small, reducing the cracking of the negative electrode active particle 100, ensuring the stability of the silicon structure, and further improving the cycling performance of the negative electrode active particle 100.

Referring to FIG. 1 again, the negative electrode active particle 100 further includes the matrix particle 10 and the plurality of carbon microspheres 20. The plurality of carbon microspheres 20 are distributed on the surface of the matrix particle 10. The average particle size d1 of the carbon microspheres 20 and the average particle size d2 of the matrix particle 10 satisfy the relationship: 0.001 ≤ d1/d2 ≤ 0.5.

In some implementations, the ratio d1/d2 of the average particle size d1 of the carbon microspheres 20 to the average particle size d2 of the matrix particle 10 may be, but not limited to, 0.001, 0.002, 0.004, 0.006, 0.008, 0.01, 0.02, 0.04, 0.06, 0.08, 0.1, 0.15, 0.2, 0.25, 0.3, 0.35, 0.4, 0.45, 0.5, etc. If the ratio d1/d2 of the average particle size d1 of the carbon microspheres 20 to the average particle size d2 of the matrix particle 10 is too small, it shows that the sizes of the carbon microspheres 20 are too small, the concave-convex structure on the surface of the negative electrode active particle 100 is not obvious, and the surface is too smooth. When such negative electrode active particle is applied to a negative electrode plate, it is difficult to closely intertwine and connect with the negative electrode binder and the negative electrode conductive agent; and during lithium intercalation and deintercalation of the negative electrode active particle 100, the negative electrode active particle 100 is prone to detach from the negative electrode binder and the negative electrode conductive agent, thereby causing pulverization of the negative electrode active layer of the negative electrode plate and reducing the cycling performance of the battery. If the ratio d1/d2 of the average particle size d1 of the carbon microspheres 20 to the average particle size d2 of the matrix particle 10 is too large, the compaction density of the negative electrode active particle 100 will be reduced, and the gravimetric capacity of the negative electrode active particle 100 will be reduced, thereby reducing the energy density of the battery using the negative electrode active particle 100. When the ratio d1/d2 of the average particle size d1 of the carbon microspheres 20 to the average particle size d2 of the matrix particle 10 is in a range of 0.001 to 0.5, a suitable concave-convex structure can be formed on the surface of the negative electrode active particle 100, which can intertwine and interlock with the binder and the negative electrode conductive agent in a negative electrode active layer of a negative electrode plate when the negative electrode active particle is applied to the negative electrode active layer, thereby reducing the detachment of the negative electrode active particle 100 from the negative electrode binder and the negative electrode conductive agent, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

In some embodiments, the average particle size d1 of the carbon microspheres 20 is in a range of 50 nm ≤ d1 ≤ 2000 nm (i.e., 2 µm). Specifically, the average particle size d1 of the carbon microspheres 20 may be, but not limited to, 50 nm, 100 nm, 150 nm, 200 nm, 250 nm, 300 nm, 350 nm, 400 nm, 600 nm, 800 nm, 1000 nm, 1200 nm, 1400 nm, 1600 nm, 1800 nm, 2000 nm, etc. If the average particle size of the carbon microspheres 20 is too small, when the negative electrode active particle 100 is applied to the negative electrode plate of a battery, a function of network interlocking is not provided, causing the negative electrode active particle 100 to easily detach from the negative electrode binder and the negative electrode conductive agent during lithium intercalation and deintercalation, thereby causing pulverization of the negative electrode active layer of the negative electrode plate and reducing the cycling performance of the battery. If the average particle size d1 of the carbon microspheres 20 is too large, the compaction density of the negative electrode active particle 100 will be reduced, and the gravimetric capacity of the negative electrode active particle 100 will be reduced, thereby reducing the energy density of the battery using the negative electrode active particle 100. In a case where the average particle size of the carbon microspheres 20 ranges from 50 nm to 2000 nm, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

In some embodiments, the mass fraction of the plurality of carbon microspheres 20 in the negative electrode active particle 100 ranges from 0.05 wt% to 5 wt%. Specifically, the mass fraction of the plurality of carbon microspheres 20 in the negative electrode active particle 100 may be, but not limited to, 0.05 wt%, 0.08 wt%, 0.1 wt%, 0.2 wt%, 0.4 wt%, 0.6 wt%, 0.8 wt%, 1 wt%, 1.5 wt%, 2 wt%, 2.5 wt%, 3 wt%, 3.5 wt%, 4 wt%, 4.5 wt%, 5 wt%, etc. If the mass fraction of the plurality of carbon microspheres 20 in the negative electrode active particle 100 is too low, the number of carbon microspheres 20 is too small or the particle sizes of the carbon microspheres 20 are too small, which causes the function of network interlocking not to be provided when the negative electrode active particle 100 is applied to the negative electrode plate of a battery, causing the negative electrode active particle 100 to easily detach from the negative electrode binder and the negative electrode conductive agent during lithium intercalation and deintercalation, thereby causing pulverization of the negative electrode active layer of the negative electrode plate and reducing the cycling performance of the battery. If the mass fraction of the carbon microspheres 20 is too large, it shows that the particle sizes of the carbon microspheres 20 are too large, which will reduce the compaction density of the negative electrode active particle 100 and the gravimetric capacity of the negative electrode active particle 100, thereby reducing the energy density of the battery using the negative electrode active particle 100. In a case where the mass fraction of the plurality of carbon microspheres 20 in the negative electrode active particle 100 ranges from 0.05 wt% to 5 wt%, when the negative electrode active particle 100 is applied to the negative electrode plate of a battery, a good function of network interlocking with the binder and the negative electrode conductive agent can be provided, reducing the detachment of the negative electrode active particle 100 from the negative electrode binder and the negative electrode conductive agent during lithium intercalation and deintercalation, and improving the cycling performance of the battery. In addition, it can also provide the negative electrode plate with a more suitable compaction density, improving the gravimetric capacity of the negative electrode active particle 100 and the energy density of the battery.

In some embodiments, the carbon microsphere 20 includes a carbon element and a first doping element. Doping the carbon microsphere 20 with the first doping element can improve the initial coulombic efficiency or kinetic performance of the negative electrode active particle 100.

In some implementations, the mass fraction of the carbon element in the carbon microspheres 20 ranges from 50 wt% to 100 wt%. The first doping element includes at least one of nitrogen, oxygen, fluorine, chlorine, phosphorus, sulfur, titanium, zirconium, vanadium, molybdenum, tungsten, aluminum, and iron. The mass fraction of the first doping element in the carbon microspheres 20 ranges from 0 to 50%.

In the embodiments, doping with the oxygen element can alleviate the expansion of the matrix particle 10 during lithium intercalation of the negative electrode active particle 100, thereby reducing the expansion rate of the negative electrode active particle 100 and improving the cycling performance of the battery using the negative electrode active particle 100. Doping with sulfur, nitrogen, or phosphorus can improve the electrical conductivity of the negative electrode active particle 100, thereby improving the kinetic performance of the battery using the negative electrode active particle 100. Doping with lithium has a lithium-supplementing effect, which is beneficial for improving the initial coulombic efficiency of the battery using the negative electrode active particle 100. Aluminum, magnesium, titanium, sodium, copper, and iron can improve the electrical conductivity of the carbon microspheres 20, thereby improving the kinetic performance of the battery using the negative electrode active particle 100.

Referring to FIG. 2 again, in some embodiments, the negative electrode active particle 100 further includes a wrapping layer 30 provided on surfaces of the plurality of carbon microspheres 20. The wrapping layer 30 includes at least one of a conductive agent and a binder. By forming the wrapping layer 30 having the conductive agent or the binder on the surfaces of the carbon microspheres 20, the conductive agent can improve the electronic conductivity of the negative electrode active particle 100. When the negative electrode active particle 100 is made into a negative electrode plate, it can increase the electrical connection between the negative electrode active particle 100 and adjacent negative electrode active particles 100, thereby improving the kinetic performance of the negative electrode plate. When the negative electrode active particle 100 is made into a negative electrode plate, the binder can enhance the adhesion between adjacent negative electrode active particles 100, reducing the expansion at the negative electrode plate level during lithium intercalation and deintercalation, and improving the cycling performance of the negative electrode plate.

For detailed descriptions of the wrapping layer 30, the conductive agent, the binder and other aspects, reference may be made to the corresponding parts above, which will not be repeated here.

Referring to FIG. 7 again, the embodiments of the disclosure further provide a method for preparing a negative electrode active particle including a matrix particle, and the preparation method includes S2011 to S2013.

S2011, a porous skeleton 11 is provided, the porous skeleton 11 having a plurality of pores 111, and an average sphericity of the porous skeleton 11 being greater than or equal to 0.8.

S2012, silicon particles 12 are deposited in the plurality of pores 111 by introducing a silicon source gas into the porous skeleton 11.

S2013, a carbon coating layer 13 is formed on a surface of the porous skeleton 11 having the silicon particles 12, thereby obtaining the matrix particle 10.

The matrix particle 10 includes the porous skeleton 11, the silicon particles 12, and the carbon coating layer 13. The porous skeleton 11 has a plurality of pores 111. The silicon particles 12 are located in the plurality of pores 111, and there is a gap between each silicon particle 12 and the inner wall of the respective pore 111. The carbon coating layer 13 wraps around an outer periphery of the porous skeleton 11 to close the gaps, thereby forming closed pores 14 from the gaps.

An average sphericity of the matrix particle 10 is greater than or equal to 0.8. An average mass fraction of the silicon particles 12 in a negative electrode active material composed of a plurality of the negative electrode active particles 100 is A, and the mass fraction of silicon particles 12 in each of 80% or more of the negative electrode active particles 100 ranges from A-10 wt% to A+10 wt%.

For detailed descriptions of S2011, S2012, and S2013 and other aspects, reference may be made to the corresponding parts above, which will not be repeated here.

In the method for preparing a negative electrode active particle of the embodiments, the porous skeleton 11 having an average sphericity greater than or equal to 0.8 is selected as the skeleton. This helps to improve the transmission of the silicon source gas in the porous skeleton 11 during silicon deposition, so that the silicon source gas is more uniformly deposited in the plurality of pores 111 of the porous skeleton 11, and the silicon particles 12 can be more uniformly deposited, improving the uniformity of distribution of the silicon particles 12 in the porous skeleton 11 and the uniformity of the size of the silicon particles 12. Thus, during lithium intercalation of the negative electrode active particle 100, the expansion of the silicon particles 12 can be better dispersed, and each silicon particle 12 in the porous skeleton 11 has a more sufficient expansion space to buffer the expansion of the silicon particle 12, reducing damage to the negative electrode active particle 100 during lithium intercalation and improving the cycling performance of the negative electrode active particle 100. In addition, by making the mass fraction of silicon particles 12 in each of more than 80% of the negative electrode active particles 100 within the range of ±10 wt%, the mass fraction of silicon particles 12 in each negative electrode active particle 100 is more balanced, so that the expansion rates of the individual negative electrode active particles 100 are close to each other during lithium intercalation of the negative electrode active particles 100, thereby avoiding excessively high content of silicon particles 12 and excessively large expansion rates in some negative electrode active particles 100, and thus enabling the negative electrode active particles 100 to have a higher cycle capacity retention rate.

In some embodiments, the depositing silicon particles 12 in the plurality of pores 111 by introducing a silicon source gas into the porous skeleton 11 includes: depositing silicon particles 12 in the plurality of pores 111 by introducing a silicon source gas at a first temperature T1, the first temperature T1 is in a range of 400°C ≤ T1 ≤ 700°C, and a ratio m/V' of a mass m of the silicon source gas to a total volume V' of the plurality of pores 111 of the porous skeleton 11 is in a range of 0.05 g/cm³ ≤ m/V' ≤ 2.0 g/cm³.

It should be noted that "the total volume V' of the plurality of pores 111 of the porous skeleton 11" refers to the sum of the volumes of the pores 111 of all porous skeletons 11 in the reaction system. For example, the total volume V' of the plurality of pores 111 of the porous skeleton 11 = weight m of the porous skeleton 11 participating in the reaction × pore volume V of the porous skeleton 11, that is, V' = mV.

In some implementations, the silicon source gas may include, but is not limited to, at least one of silane, disilane, dichlorosilane, trichlorosilane, and the like.

In some implementations, before the silicon source gas is introduced into the porous skeleton 11, the silicon source gas may be mixed with a protective gas, and then the mixed gas is introduced; alternatively, the protective gas may be introduced simultaneously with the silicon source gas.

In some implementations, the protective gas may be, but not limited to, at least one of argon, nitrogen, and the like.

Specifically, the first temperature T1 may be, but not limited to, 400°C, 430°C, 450°C, 480°C, 500°C, 530°C, 550°C, 580°C, 600°C, 630°C, 650°C, 680°C, 700°C, etc. If the first temperature T1 is too high, the reaction rate of the silicon source gas is too fast, and the silicon source gas begins to deposit before it enters the pores 111 of the porous skeleton 11. The deposition of silicon on the surface of the porous skeleton 11 causes expansion of silicon not to be constrained by the space of the porous skeleton 11 during lithium intercalation of the negative electrode active particle 100, increasing the expansion rate of the entire negative electrode active particle 100, and deteriorating the cycling performance of the battery using the negative electrode active particle 100. In addition, the deposition of silicon on the surface allows the size of silicon to grow continuously without being limited by the size of the pores 111 in the porous skeleton 11. Excessively large silicon size leads to the generation of a Li₁₅Si₄ phase during lithium intercalation, which further deteriorates the cycling performance of the battery using the negative electrode active particle 100. If the first temperature T1 is too low, the silicon source gas is difficult to decompose into silicon and difficult to deposit, and it is impossible to form the silicon particles 12 in the pores 111 of the porous skeleton 11.

Specifically, the ratio m/V' of the mass m of the silicon source gas to the total volume V' of the plurality of pores 111 of the porous skeleton 11 may be, but not limited to, 0.05 g/cm³, 0.08 g/cm³, 0.1 g/cm³, 0.15 g/cm³, 0.2 g/cm³, 0.25 g/cm³, 0.3 g/cm³, 0.4 g/cm³, 0.5 g/cm³, 0.6 g/cm³, 0.8 g/cm³, 1.0 g/cm³, 1.2 g/cm³, 1.4 g/cm³, 1.6 g/cm³, 1.8 g/cm³, 1.9 g/cm³, 2.0 g/cm³, etc. If the ratio m/V' of the mass m of the silicon source gas to the total volume V' of the plurality of pores 111 of the porous skeleton 11 is too small, the energy density of the prepared negative electrode active particle 100 is too low. If the ratio m/V' of the mass m of the silicon source gas to the total volume V' of the plurality of pores 111 of the porous skeleton 11 is too large, the mass fraction of silicon in the prepared negative electrode active particle 100 is too high, which increases the expansion rate of the negative electrode active particle 100. In this case, during lithium intercalation of the negative electrode active particle 100, the porous skeleton 11 is insufficient to support the expansion of the silicon particles 12, making the negative electrode active particle 100 prone to cracking, which affects the cycling performance of the battery using the negative electrode active particle 100. When the ratio m/V' of the mass m of the silicon source gas to the total volume V' of the plurality of pores 111 of the porous skeleton 11 is in a range of 0.05 g/cm³ ≤ m/V' ≤ 2 g/cm³, the negative electrode active particle 100 can have a high energy density while having a low expansion rate, thereby enabling the battery using the negative electrode active particle 100 to have better cycling performance.

In some implementations, the deposition time t of the silicon particles 12 is in a range of 3 h ≤ t ≤ 100 h. Specifically, the deposition time t of the silicon particles 12 may be, but not limited to, 3 h, 5 h, 8 h, 10 h, 15 h, 20 h, 25 h, 30 h, 35 h, 40 h, 50 h, 60 h, 70 h, 80 h, 90 h, 100 h, etc. If the deposition time t of the silicon particles 12 is too long, the growth of the silicon particles 12 is easily excessive, resulting in excessively large silicon particles 12 and excessively large silicon phase size in the negative electrode active particle 100, thereby making the negative electrode active particle 100 more prone to generating the Li₁₅Si₄ crystalline phase during lithium intercalation. During the formation of the crystalline phase, the negative electrode active particle 100 leads to higher internal stress and greater volume changes, deteriorating the cycling performance of the negative electrode active particle 100. If the deposition time t of the silicon particles 12 is too short, the silicon content in the negative electrode active particle 100 is reduced, reducing the specific capacity of the negative electrode active particle 100.

In some implementations, the forming the carbon coating layer 13 on the surface of the porous skeleton 11 having the silicon particles 12 includes: forming the carbon coating layer 13 on the surface of the porous skeleton 11 having the silicon particles 12, in a first organic carbon source at a second temperature T2, the second temperature T2 being in a range of 500°C ≤ T2 ≤ 900°C.

In some implementations, the first organic carbon source is added to the porous skeleton 11 having the silicon particles 12, and chemical vapor deposition (i.e., carbon deposition) is performed at 500°C to 900°C, thereby forming the carbon coating layer 13 on the surface of the porous skeleton 11 having the silicon particles 12.

In some implementations, the first organic carbon source includes a first organic gas and a first carrier gas. The first organic gas may be, but not limited to, at least one of acetylene, methane, and the like. The first carrier gas may be, but not limited to, at least one of nitrogen, argon, and the like.

In some implementations, the volume concentration V1 of the first organic gas in the first organic carbon source ranges from 1% to 50%. Specifically, the volume concentration V1 of the first organic gas in the first organic carbon source may be, but not limited to, 1%, 3%, 5%, 7%, 10%, 15%, 20%, 25%, 30%, 35%, 40%, 45%, 50%, etc. If the volume concentration V1 of the first organic gas in the first organic carbon source is too low, the formation rate of the carbon coating layer 13 is reduced, reducing production efficiency. If the volume concentration V1 of the first organic gas in the first organic carbon source is too high, the rate of carbon deposition is too fast, resulting in non-uniform carbon deposition, which cannot effectively close the silicon particles 12 in the pores 111 of the porous skeleton 11.

In some implementations, the second temperature T2 may be, but not limited to, 500°C, 550°C, 600°C, 650°C, 700°C, 750°C, 800°C, 850°C, 900°C, etc. If the second temperature T2 is too low, the first organic carbon source is difficult to reduce. If the second temperature T2 is too high, the carbon deposition is too fast, easily resulting in a non-uniform carbon coating layer 13, making it difficult to completely close the silicon particles 12 in the pores 111 of the porous skeleton 11, increasing side reactions of the silicon particles 12, and reducing the cycling performance of the negative electrode active particle 100. In addition, if the second temperature T2 is too high, inert silicon carbide is easily generated, reducing the energy density of the negative electrode active particle 100.

In some implementations, the deposition time of the carbon coating layer 13 may range from 1 min to 3 h, for example, 1 min, 20 min, 30 min, 45 min, 1 h, 1.5 h, 2 h, 2.5 h, 3 h, etc. If the deposition time of the carbon coating layer 13 is too short, the first organic carbon source is difficult to reduce, and the carbon coating layer 13 cannot completely cover the porous skeleton 11, which exposes some silicon particles 12, thereby increasing side reactions between the negative electrode active particle 100 and the electrolyte. If the deposition time of the carbon coating layer 13 is too long, inert silicon carbide is easily generated, and the formed carbon coating layer 13 is too thick, reducing the energy density of the negative electrode active particle 100.

Further, the deposition time of the carbon coating layer 13 may range from 1 h to 3 h. In this case, the formed carbon coating layer 13 can better close the pores 111 or gaps, and the negative electrode active particle 100 can have a high energy density.

For detailed descriptions of the porous skeleton 11, silicon particles 12, carbon coating layer 13, pores 111, gaps, and closed pores 14, reference may be made to the corresponding parts of the above embodiments, which will not be repeated here.

In some embodiments, the negative electrode active particle further includes a plurality of carbon microspheres 20 distributed on the surface of the matrix particle 10, and S202 of the preparation method further comprises: forming a plurality of carbon microspheres 20 on the surface of the matrix particle 10 by placing the matrix particle 10 in a second organic carbon source at a third temperature T3, the third temperature T3 being in a range of 300°C ≤ T3 ≤ 900°C.

In some embodiments, the second organic carbon source may be an organic carbon source solution. The organic carbon source solution includes at least one of a glucose solution, a fructose solution, a lactose solution, a citric acid solution, a sucrose solution, and the like.

In some other embodiments, the second organic carbon source includes a second organic gas and a second carrier gas. In some implementations, the second organic gas may be, but not limited to, at least one of acetylene, methane, and the like. The second carrier gas may be, but not limited to, at least one of nitrogen, argon, and the like.

Further, when the second organic carbon source includes the second organic gas and the second carrier gas, the third temperature T3 for depositing the carbon microspheres 20 is in a range of 500°C ≤ T3 ≤ 900°C. When the second organic carbon source includes the organic carbon source solution, the third temperature T3 for forming the carbon microspheres 20 is in a range of 300°C ≤ T3 ≤ 900°C. That is, the organic carbon source is carbonized at the third temperature to form the carbon microspheres 20.

In some implementations, the third temperature T3 may be, but not limited to, 300°C, 350°C, 400°C, 450°C, 500°C, 550°C, 600°C, 650°C, 700°C, 750°C, 800°C, 850°C, 900°C, etc. If the third temperature T3 is too low, the second organic carbon source is difficult to reduce or carbonize to form the carbon microspheres 20. In addition, if the third temperature is too low and the second organic carbon source includes the second organic gas, the second organic carbon source tends to form a coating layer after deposition, making it difficult to form the carbon microspheres 20. If the third temperature T3 is too high, inert silicon carbide is easily generated, reducing the energy density of the negative electrode active particle 100.

In some implementations, the volume concentration V2 of the second organic gas in the second organic carbon source ranges from 5% to 100%. Specifically, the volume concentration V2 of the second organic gas in the second organic carbon source may be, but not limited to, 5%, 7%, 10%, 15%, 20%, 25%, 30%, 35%, 40%, 45%, 50%, 60%, 70%, 80%, 90%, 100%, etc. If the volume concentration V2 of the second organic gas in the second organic carbon source is too low, the rate of carbon deposition is reduced, making it difficult to form non-uniformly deposited carbon microspheres 20 on the surface of the carbon coating layer 13.

In some implementations, the deposition time of the carbon microspheres 20 may range from 1 min to 3 h, for example, 1 min, 20 min, 30 min, 45 min, 1 h, 1.5 h, 2 h, 2.5 h, 3 h, etc. If the deposition time of the carbon microspheres 20 is too short, the first organic carbon source is difficult to reduce, and the carbon microspheres 20 cannot completely cover the porous skeleton 11, which exposes some silicon particles 12, thereby increasing side reactions between the negative electrode active particle 100 and the electrolyte. If the deposition time of the carbon microspheres 20 is too long, inert silicon carbide is easily generated, and the formed carbon microspheres 20 are too thick, reducing the energy density of the negative electrode active particle 100.

Further, the deposition time of the carbon microspheres 20 may range from 1 h to 3 h. In this case, the formed carbon microspheres 20 can better close the pores 111 or gaps, and the negative electrode active particle 100 can have a high energy density.

In some embodiments, the first organic carbon source includes a first organic gas and a first carrier gas, the second organic carbon source includes a second organic gas and a second carrier gas, the second temperature T2 is lower than the third temperature T3, and the volume concentration of the first organic gas in the first organic carbon source is lower than the volume concentration of the second organic gas in the second organic carbon source.

In the embodiments, by making the second temperature T2 lower than the third temperature T3 and making the volume concentration of the first organic gas in the first organic carbon source lower than the volume concentration of the second organic gas in the second organic carbon source, when chemical vapor deposition is performed using the first organic carbon source, the deposition rate of carbon is slower, so that the carbon deposition can be more uniform, better closing the pores 111 in the porous skeleton 11, and thus better forming the carbon coating layer 13 on the surface of the porous skeleton 11. When chemical vapor deposition is performed using the second organic carbon source, the deposition rate of carbon is faster, so that individual carbon microspheres 20 can be formed on the surface of the carbon coating layer 13, and a concave-convex structure is formed on the surface of the negative electrode active particle 100, which can intertwine and interlock with the binder and the negative electrode conductive agent in a negative electrode active layer of a negative electrode plate when the negative electrode active particle is applied to the negative electrode active layer, thereby reducing the detachment of the negative electrode active particle 100 from the negative electrode binder and the negative electrode conductive agent and the loss of the conductive network, and helping to maintain better cycling performance. In addition, the carbon microspheres 20 themselves have good electrical conductivity. At the positions where the carbon microspheres 20 protrude, the negative electrode active particle 100 can also maintain electrical contact with surrounding graphite particles or other negative electrode active particles 100, reducing the polarization phenomenon of the negative electrode plate and improving the kinetic performance of the negative electrode active particle 100.

In some embodiments, the difference T3-T2 between the third temperature T3 and the second temperature T2 is in a range of 20°C ≤ T3-T2 ≤ 250°C.

Alternatively, the difference V2-V1 between the volume concentration V2 of the second organic gas in the second organic carbon source and the volume concentration V1 of the first organic gas in the first organic carbon source is in a range of 5% ≤ V2-V1 ≤ 99%.

Alternatively, the difference T3-T2 between the third temperature T3 and the second temperature T2 is in a range of 20°C ≤ T3-T2 ≤ 250°C, and the difference V2-V1 between the volume concentration V2 of the second organic gas in the second organic carbon source and the volume concentration V1 of the first organic gas in the first organic carbon source is in a range of 5% ≤ V2-V1 ≤ 99%.

Specifically, the difference T3-T2 between the third temperature T3 and the second temperature T2 may be, but not limited to, 20°C, 30°C, 50°C, 80°C, 100°C, 130°C, 150°C, 180°C, 200°C, 230°C, 250°C, etc. If the difference T3-T2 between the third temperature T3 and the second temperature T2 is too small, when both the third temperature T3 and the second temperature T2 are relatively low, the deposition of the carbon microspheres 20 may fail to produce the carbon microspheres 20; and when both the third temperature T3 and the second temperature T2 are relatively high, the deposition of the carbon coating layer 13 may be too fast due to the high deposition rate of carbon, easily resulting in a non-uniform carbon coating layer 13, making it difficult to completely close the silicon particles 12 in the pores 111 of the porous skeleton 11, increasing side reactions of the silicon particles 12, and reducing the cycling performance of the negative electrode active particle 100. In addition, if the second temperature T2 is too high, inert silicon carbide is easily generated, reducing the energy density of the negative electrode active particle 100. If the difference T3-T2 between the third temperature T3 and the second temperature T2 is too large, during the deposition of the silicon particles 12, inert silicon carbide is easily generated, reducing the energy density of the negative electrode active particle 100.

Specifically, the difference V2-V1 between the volume concentration V2 of the second organic gas in the second organic carbon source and the volume concentration V1 of the first organic gas in the first organic carbon source may be, but not limited to, 5%, 7%, 10%, 15%, 20%, 25%, 30%, 35%, 40%, 45%, 50%, 60%, 70%, 80%, 90%, 99%, etc. If the difference V2-V1 between the volume concentration V2 of the second organic gas in the second organic carbon source and the volume concentration V1 of the first organic gas in the first organic carbon source is too small, it is possible that both the volume concentration V2 of the second organic gas in the second organic carbon source and the volume concentration V1 of the first organic gas in the first organic carbon source are relatively high, in this case, during the deposition of the carbon coating layer 13, the deposition rate of the carbon coating layer 13 is too high, thereby reducing the uniformity of the deposition of the carbon coating layer 13 and reducing the cycling performance of the negative electrode active particle 100; alternatively, it is possible that both the volume concentration V2 of the second organic gas in the second organic carbon source and the volume concentration V1 of the first organic gas in the first organic carbon source are relatively low, which reduces the production efficiency of the negative electrode active particle 100. If the difference V2-V1 between the volume concentration V2 of the second organic gas in the second organic carbon source and the volume concentration V1 of the first organic gas in the first organic carbon source is too large, the volume concentration V1 of the first organic gas in the first organic carbon source may be too low, which reduces the production efficiency of the negative electrode active particle 100.

Referring to FIG. 8, the embodiments of the disclosure further provides a negative electrode plate 400, which includes a negative electrode current collector 410 and a negative electrode active layer 420. The negative electrode active layer 420 is provided on a surface of the negative electrode current collector 410. The negative electrode active layer 420 includes the negative electrode active particle 100 according to the embodiments of the disclosure or the negative electrode active particle 100 prepared by the method for preparing a negative electrode active particle according to the embodiments of the disclosure.

In some implementations, the negative electrode active layer 420 may be provided on one or multiple surfaces of the negative electrode current collector 410.

In some implementations, the negative electrode current collector 410 may be, but not limited to, a copper plate.

In some implementations, the negative electrode active layer 420 further includes a negative electrode conductive agent and a negative electrode binder. It can be understood that the negative electrode active particles 100, the negative electrode conductive agent, and the negative electrode binder are uniformly dispersed.

In some implementations, the negative electrode conductive agent may be, but not limited to, conductive carbon black (SP), acetylene black, carbon nanotubes, carbon fiber, and graphite.

In some implementations, the negative electrode binder may be, but not limited to, at least one of polyacrylic acid (PAA), polyvinylidene fluoride (PVDF), polyamide (PA), polyacrylonitrile (PAN), polyacrylate, polyvinylether, polymethyl methacrylate (PMMA), polyhexafluoropropylene, polymerized styrene butadiene rubber (SBR), and the like.

In some implementations, the mass fraction of the negative electrode binder in the negative electrode active layer 420 ranges from 2 wt% to 4 wt%. Specifically, the mass fraction of the negative electrode binder in the negative electrode active layer 420 may be, but not limited to, 2 wt%, 2.5 wt%, 3 wt%, 3.5 wt%, 4 wt%, etc. If the mass fraction of the negative electrode binder is too small, the negative electrode active layer 420 is prone to pulverization or shedding. If the mass fraction of the negative electrode binder is too large, the energy density of the negative electrode plate 400 is reduced.

Referring to FIG. 9 and FIG. 10, the embodiments of the disclosure further provides a battery 500, which includes: an electrolyte, a positive electrode plate 510, a separator 530, and a negative electrode plate 400 according to the embodiments of the disclosure. The positive electrode plate 510 is at least partially immersed in the electrolyte. The separator 530 is located on one side of the positive electrode plate 510 and at least partially immersed in the electrolyte. The negative electrode plate 400 is provided on a side of the separator 530 away from the positive electrode plate 510 and at least partially immersed in the electrolyte.

It can be understood that the positive electrode plate 510, the separator 530, and the negative electrode plate 400 are stacked in sequence.

The battery 500 of the embodiments of the disclosure may be, but not limited to, a lithium-ion secondary battery 500, a lithium-ion primary battery 500, a lithium-sulfur battery 500, a sodium-lithium-ion battery 500, a sodium-ion battery 500, or a magnesium-ion battery 500.

Referring also to FIG. 11, in some implementations, the positive electrode plate 510 includes a positive electrode current collector 511 and a positive electrode active layer 513 covering a surface of the positive electrode current collector 511. It can be understood that the positive electrode active layer 513 may cover one surface or two opposite surfaces of the positive electrode current collector 511.

The positive electrode current collector 511 may be, but not limited to, an aluminum plate.

In some implementations, the positive electrode active layer 513 includes a positive electrode active material, a positive electrode conductive agent, and a positive electrode binder.

In some implementations, the positive electrode active material may be, but not limited to, at least one of lithium iron phosphate, lithium cobalt oxide, and the like.

In some implementations, the positive electrode conductive agent may be, but not limited to, at least one of conductive carbon black, acetylene black, carbon nanotubes, carbon fiber, graphene, and the like.

In some implementations, the positive electrode binder may be, but not limited to, at least one of polyvinylidene fluoride (PVDF), polyamide (PA), polyacrylonitrile (PAN), polyacrylate, polyvinylether, polymethyl methacrylate (PMMA), polyhexafluoropropylene, polymerized styrene butadiene rubber (SBR), and the like.

In some implementations, the mass fraction of the positive electrode binder in the positive electrode active layer 513 ranges from 2 wt% to 4 wt%. Specifically, the mass fraction of the positive electrode binder in the positive electrode active layer 513 may be, but not limited to, 2 wt%, 2.5 wt%, 3 wt%, 3.5 wt%, 4 wt%, etc. If the mass fraction of the positive electrode binder is too small, the positive electrode active layer 513 is prone to pulverization or shedding. If the mass fraction of the positive electrode binder is too large, the energy density of the positive electrode plate 510 is reduced.

In some implementations, the electrolyte includes an electrolyte salt, an organic solvent, and a film-forming additive.

In some implementations, the electrolyte salt is a lithium salt, and the lithium salt may include, but is not limited to, at least one of lithium hexafluorophosphate (LiPF₆), lithium tetrafluoroborate (LiBF₄), lithium bis(fluorosulfonyl)imide (LiFSI), lithium bis(trifluoromethanesulfonyl)imide (LiTFSI), lithium bis(oxalato)borate (LiBOB), LiODFP, lithium difluoro(oxalato)borate (LiODFB), lithium difluorophosphate (LiPO₂F₂), lithium trifluoromethanesulfonate (CF₃SO₃Li), and the like.

In some implementations, in the electrolyte, the molar concentration M of the lithium salt is in a range of 0.7 mol/L ≤ M ≤ 1.4 mol/L. In the electrolyte, the molar concentration M of the lithium salt may be, but not limited to, 0.7 mol/L, 0.8 mol/L, 0.9 mol/L, 1.0 mol/L, 1.1 mol/L, 1.2 mol/L, 1.3 mol/L, 1.4 mol/L, etc. If the molar concentration M of the lithium salt in the electrolyte is too small, the concentration of free ions in the electrolyte is too low, reducing the conductivity of the electrolyte, thereby reducing the kinetic performance of the battery. If the molar concentration M of the lithium salt in the electrolyte is too large, a portion of the electrolyte salt may remain undissociated, and the viscosity of the electrolyte increases, which also reduces the conductivity of the electrolyte and reduces the kinetic performance of the battery. When the molar concentration M of the lithium salt in the electrolyte is in a range of 0.7 mol/L ≤ M ≤ 1.4 mol/L, the electrolyte can have high conductivity, thereby enabling the battery to have better kinetic performance.

In some implementations, the organic solvent includes at least one of a cyclic carbonate and a chain carbonate. Cyclic carbonates have a high dielectric constant and high ionic conductivity, and can form a stable SEI film on the surface of the negative electrode plate 400, but they have a relatively high viscosity. Chain carbonates have a lower viscosity than cyclic carbonates and better electrochemical stability, and can improve the low-temperature performance of the electrolyte. Therefore, when a mixed solvent of a cyclic carbonate and a chain carbonate is used, the electrolyte can have a suitable viscosity and low-temperature stability, and the battery 500 using the electrolyte can also form a film better.

In some implementations, the cyclic carbonate may include, but is not limited to, at least one of ethylene carbonate (EC), propylene carbonate (PC), and the like. Ethylene carbonate has a much higher dielectric constant than propylene carbonate, and ethylene carbonate can better promote the formation of the SEI film.

In some implementations, the chain carbonate may include, but is not limited to, at least one of dimethyl carbonate (DMC), diethyl carbonate (DEC), ethyl methyl carbonate (EMC), and the like.

In some implementations, the organic solvent includes at least one of a cyclic carbonate and a chain carbonate. Cyclic carbonates have a high dielectric constant and high ionic conductivity, and can form a stable SEI film on the surface of the negative electrode plate 400, but they have a relatively high viscosity. Chain carbonates have a lower viscosity than cyclic carbonates and better electrochemical stability, and can improve the low-temperature performance of the electrolyte. Therefore, when a mixed solvent of a cyclic carbonate and a chain carbonate is used, the electrolyte can have a suitable viscosity and low-temperature stability, and the battery 500 using the electrolyte can also form a film better.

In some implementations, the cyclic carbonate may include, but is not limited to, at least one of ethylene carbonate (EC), propylene carbonate (PC), and the like. Ethylene carbonate has a much higher dielectric constant than propylene carbonate, and ethylene carbonate can better promote the formation of the SEI film.

In some implementations, the chain carbonate may include, but is not limited to, at least one of dimethyl carbonate (DMC), diethyl carbonate (DEC), ethyl methyl carbonate (EMC), and the like.

In some implementations, the film-forming additive includes at least one of fluoroethylene carbonate (FEC), ethylene sulfate (PST), vinylene carbonate (VC), vinyl ethylene carbonate (VEC), tris(trimethylsilyl) phosphate, tris(trimethylsilyl) borate, adiponitrile, succinonitrile, and 1,3,6-hexanetricarbonitrile.

In some implementations, the mass fraction of the film-forming additive ranges from 1.5% to 3%. Specifically, the mass fraction of the film-forming additive may be, but not limited to, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, etc. The film-forming additive may be used to promote the formation of an interfacial film on at least one of the positive electrode plate 510 and the negative electrode plate 400 and to maintain the stability of the interfacial film.

In some implementations, the separator 530 may be, but not limited to, at least one of a polypropylene film (PP), a polyethylene film (PE), a ceramic film, and the like. In some implementations, the thickness of the separator 530 ranges from 14 µm to 18 µm. Specifically, the thickness of the separator 530 may be, but not limited to, 14 µm, 14.5 µm, 15 µm, 15.5 µm, 16 µm, 16.5 µm, 17 µm, 17.5 µm, 18 µm, etc.

In some embodiments, the battery 500 further includes a case 550 and an end cap assembly 570. The case 550 and the end cap assembly 570 define a receiving space (not shown in the figures). The receiving space is used to receive the electrolyte, the positive electrode plate 510, the separator 530, and the negative electrode plate 400. The end cap assembly 570 includes a positive electrode terminal (not shown in the figures) and a negative electrode terminal (not shown in the figures). The positive electrode terminal is electrically connected to the positive electrode plate 510, and the negative electrode terminal is electrically connected to the negative electrode plate 400. The positive electrode terminal and the negative electrode terminal are used to electrically connect the battery 500 to an electrical device or other batteries 500.

It can be understood that the battery 500 described in the embodiments is merely one form of the battery 500 to which the negative electrode plate 400 is applied, and should not be construed as limiting the battery 500 provided by the disclosure, nor as limiting the negative electrode plate 400 provided by the various embodiments of the disclosure.

The following further describes the matrix particle 10 and the battery 500 of the disclosure through specific examples.

### Example 1

The matrix particle 10 of this example was prepared by the following operations:
1) 1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h. The total mass m of the introduced silane was 1000 g.
3) Formation of carbon coating layer 13: The temperature was heated to 650°C, and acetylene gas (first organic gas) was introduced. The reaction was carried out for 2 h. After cooling, the obtained black powder was the matrix particle 10.

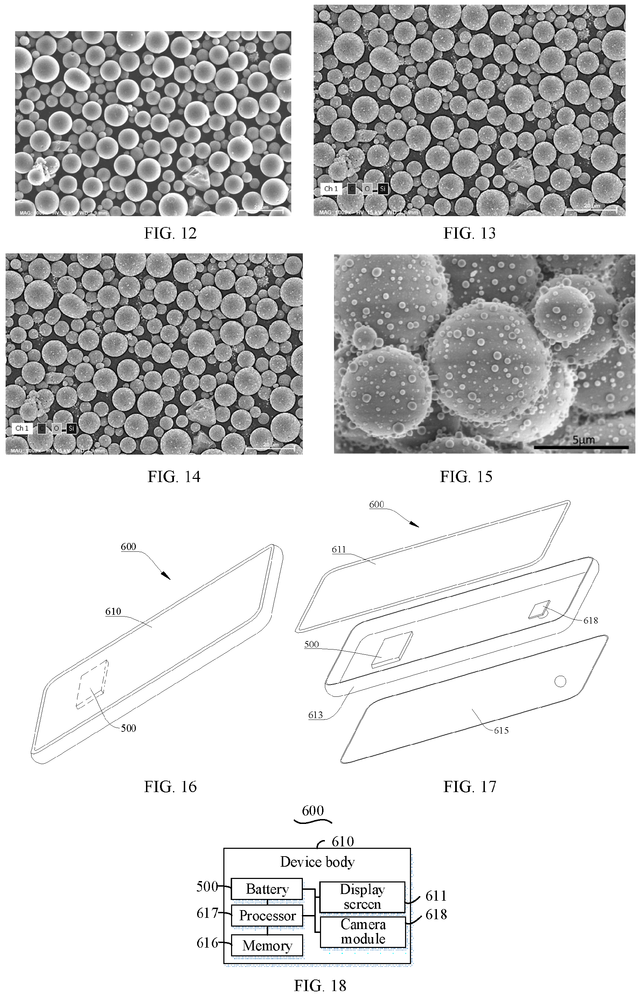

A scanning electron microscope (SEM) image of the matrix particle 10 prepared in Example 1 is shown in FIG. 12.

Energy dispersive spectrometer (EDS) scanning tests were performed on the matrix particle 10 prepared in Example 1, and the obtained EDS scanning images are shown in FIG. 13 and FIG. 14.

### Example 2

The matrix particle 10 of this example was prepared by the following operations:
1) 1000 g of spherical porous carbon was loaded into a chemical vapor deposition furnace to serve as a porous skeleton 11. The porous skeleton 11 had an average sphericity of 0.85, and included a plurality of pores 111. The average size of the pores 111 was 1.9 nm, and the pore volume of the porous skeleton 11 was 0.7 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h. The total mass m of the introduced silane was 900 g.
3) Formation of carbon coating layer 13: The temperature was heated to 650°C, and acetylene gas (first organic gas) was introduced. The reaction was carried out for 2 h. After cooling, the obtained black powder was the matrix particle 10.

### Example 3

The matrix particle 10 of this example was prepared by the following operations:
1)1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h. The total mass m of the introduced silane was 1200 g.
3) Formation of carbon coating layer 13: The temperature was heated to 650°C, and acetylene gas (first organic gas) was introduced. The reaction was carried out for 2 h. After cooling, the obtained black powder was the matrix particle 10.

### Example 4

The matrix particle 10 of this example was prepared by the following operations:
1) 1000 g of spherical titanium carbide was loaded into a chemical vapor deposition furnace to serve as a porous skeleton 11. The porous skeleton 11 had an average sphericity of 0.9, and included a plurality of pores 111. The average size of the pores 111 was 1.8 nm, and the pore volume of the porous skeleton 11 was 0.9 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h. The total mass m of the introduced silane was 1000 g.
3) Formation of carbon coating layer 13: The temperature was heated to 650°C, and acetylene gas (first organic gas) was introduced. The reaction was carried out for 2 h. After cooling, the obtained black powder was the matrix particle 10.

### Comparative Example 1

The matrix particle 10 of this comparative example was prepared by the following operations:
1) 1000 g of spherical porous carbon was loaded into a chemical vapor deposition furnace to serve as a porous skeleton 11. The porous skeleton 11 had an average sphericity of 0.67, and included a plurality of pores 111. The average size of the pores 111 was 1.8 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 6 h. The total mass m of the introduced silane was 1000 g.
3) Formation of carbon coating layer 13: The temperature was heated to 650°C, and acetylene gas (first organic gas) was introduced. The reaction was carried out for 2 h. After cooling, the obtained black powder was the matrix particle 10.

### Comparative Example 2

The matrix particle 10 of this comparative example was prepared by the following operations:
1)1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h. The total mass m of the introduced silane was 2000 g.
3) Formation of carbon coating layer 13: The temperature was heated to 650°C, and acetylene gas (first organic gas) was introduced. The reaction was carried out for 2 h. After cooling, the obtained black powder was the matrix particle 10.

It should be noted that the matrix particle 10 of the disclosure can be directly used as a negative electrode active material and applied to the negative electrode plate 400.

The matrix particles 10 obtained in Examples 1 to 4 and Comparative Examples 1 to 2 were subjected to the following tests:
1) Measurement of Ia/Ib: CuK α ray was used to perform X-ray powder diffraction (XRD) tests on the matrix particles 10 of individual examples and comparative examples, with a wavelength of 0.154 nm, thereby obtaining the X-ray diffraction patterns of individual example and comparative examples. Ia and Ib were obtained from the diffraction patterns, and Ia/Ib was calculated. The Ia/Ib values for Examples 1 to 4 and Comparative Examples 1 to 2 are shown in Table 1 below.
2) Measurement of the average particle size d3 of the silicon particles 12:
The matrix particles 10 of individual examples and comparative examples were heated to 700°C in an inert atmosphere (N₂, Ar, vacuum, etc.) and held for 2 h, then cooled to room temperature. CuK α ray was used to perform XRD tests, with a wavelength of 0.154 nm, thereby obtaining the X-ray diffraction patterns of the matrix particles 10 of individual examples and comparative examples after undergoing the heat treatment. The average particle size d3 of the silicon particles 12 was determined by the Scherrer method based on the full width at half maximum (FWHM) of the Si(111) diffraction peak near 2θ=28.4° in the X-ray diffraction patterns: d3 = 7.852/(FWHM * cosθ). The d3 values for Examples 1 to 4 and Comparative Examples 1 to 2 are shown in Table 1 below.
3) Preparation of coin-type (button-type) half-cells 500: The matrix particles 10 were mixed with conductive carbon black (SP), carbon nanotubes (CNT), and polyacrylic acid (PAA) at a mass ratio of 80:8:2:10 to form a slurry. The slurry was coated on copper foil (i.e., negative electrode current collector), vacuum dried, and rolled to obtain a negative electrode plate 400. The negative electrode plate 400 was assembled into a coin-type half-cell 500 using a lithium plate as a counter electrode.
4) Capacity grading and cycling tests of the coin-type half-cells 500: The cells were discharged to 5 mV at a rate of 0.1 C, rested for 5 min; then discharged to 5 mV at a rate of 0.05 C, rested for 5 min; then discharged to 5 mV at a rate of 0.02 C, rested for 10 min; and then charged to 1.5 V at a rate of 0.1 C. Such cycle was performed 50 times on each cell, and the cycle capacity retention rate after 50 cycles was calculated. The 50-cycle capacity retention rates of the coin-type half-cells 500 composed of the matrix particles 10 of Examples 1 to 4 and Comparative Examples 1 to 2 are shown in Table 2 below.
5) The matrix particles 10 of each of Examples 1 to 4 and Comparative Examples 1 to 2 were mixed with graphite, PAA, and CNT at a mass ratio of 10:87:2.8:0.2 to form a slurry, which was then coated on a negative electrode current collector, dried at 100°C, and rolled under a pressure of 5 t to obtain a negative electrode plate 400. A positive electrode active material, lithium cobalt oxide, was mixed with conductive carbon black (conductive agent) and binder PVDF at a mass ratio of 98:1:1 to form a slurry, which was then coated on a positive electrode current collector, followed by drying and rolling to obtain a positive electrode plate. The negative electrode plate 400, the positive electrode plate, and a separator were used to fabricate a wound battery 500, followed by aluminum-plastic film packaging, drying, electrolyte injection, formation, secondary packaging, and grading to obtain the battery 500, and then a cycling test was performed at 25°C. The cycle capacity retention rates and thickness expansion rates of the batteries 500 formed with the matrix particles 10 of Examples 1 to 4 and Comparative Examples 1 to 2 after 400 cycles are shown in Table 3 below.
6) Calculation of the thickness expansion rate of the battery 500: Thickness expansion rate of the battery = (thickness of the battery 500 after n cycles - initial thickness of the battery 500) / initial thickness of the battery 500 × 100%.

**Table 1**

| Example | Average mass fraction A of silicon particles | Range of mass fraction of silicon particles in 80% of matrix particles | Iₐ/I_{b} | Average particle size d3 of silicon particles (nm) |
|---|---|---|---|---|
| Example 1 | 45 wt% | ±3 wt% | 0.74 | 1.14 |
| Example 2 | 42 wt% | ±8 wt% | 0.68 | 1.48 |
| Example 3 | 50 wt% | ±4 wt% | 0.62 | 1.34 |
| Example 4 | 47 wt% | ±6 wt% | 0.70 | 1.37 |
| Comparative Example 1 | 46 wt% | ±13 wt% | 0.49 | 2.34 |
| Comparative Example 2 | 62 wt% | ±10 wt% | 0.36 | 4.67 |

**Table 2**

| Example | First-cycle lithium intercalation specific capacity (mAh/g) | First-cycle lithium deintercalation specific capacity (mAh/g) | Capacity retention rate after 50 cycles |
|---|---|---|---|
| Example 1 | 1886 | 1745 | 98.7% |
| Example 2 | 1773 | 1627 | 95.8% |
| Example 3 | 1982 | 1820 | 97.2% |
| Example 4 | 1902 | 1766 | 96.7% |
| Comparative Example 1 | 1878 | 1741 | 89.1% |
| Comparative Example 2 | 2234 | 2090 | 83.4% |

**Table 3**

| Example | Capacity retention rate after 400 cycles | Thickness expansion rate of battery after 400 cycles |
|---|---|---|
| Example 1 | 96.8% | 3.0% |
| Example 2 | 93.2% | 4.6% |
| Example 3 | 95.3% | 3.4% |
| Example 4 | 94.1% | 4.2% |
| Comparative Example 1 | 87.0% | 7.6% |
| Comparative Example 2 | 85.7% | 8.5% |

As can be seen from FIG. 12, the matrix particle 10 of Example 1 of the disclosure has good sphericity. As can be seen from FIG. 13 and FIG. 14, the distribution of the silicon particles 12 (blue dots in FIG. 13) in the matrix particle 10 prepared in Example 1 is very uniform, the silicon particles 12 are mainly distributed in the pores 111 of the porous skeleton 11, and the silicon particles 12 have a relatively small size.

From the test data of the Examples and Comparative Examples in Tables 1 and 2, it can be seen that the higher the sphericity of the porous skeleton 11, the smaller the average particle size of the silicon particles 12 deposited in the porous skeleton 11, and the narrower the distribution of the mass fraction of silicon particles 12 in each matrix particle 10 in the negative electrode active material composed of a plurality of matrix particles 10, meaning the mass fractions of silicon particles 12 in individual matrix particles 10 are close to each other. The coin-type half-cell 500 prepared using such matrix particles 10 has a higher cycle capacity retention rate. From the test data in Table 3, it can be seen that the higher the sphericity of the porous skeleton 11, the smaller the average particle size of the silicon particles 12, the narrower the distribution of the mass fraction of silicon particles 12 in each matrix particle 10 in the negative electrode active material composed of a plurality of matrix particles 10, and the higher the cycle capacity retention rate and the lower the expansion rate of the batteries 500 prepared using the matrix particles 10. In addition, the thickness expansion rates of the batteries 500 prepared using the matrix particles 10 of the disclosure after 400 cycles are all less than or equal to 4.6%.

From the test data of Example 1 and Comparative Example 2, it can be seen that, if the total mass of silane is too high during silicon deposition, the size of the silicon particles 12 in the prepared matrix particle 10 increases, and the distribution of the mass fraction of silicon particles 12 in each matrix particle 10 broadens, thereby causing different expansion rates of different matrix particles 10 during lithium intercalation, increasing the expansion rate of the matrix particles 10 during lithium intercalation, and reducing the cycle capacity retention rate of the matrix particles 10.

The Ia/Ib values of the matrix particles 10 of Examples 1 to 4 are all between 0.5 and 0.95. The coin-type half-cells 500 prepared using the matrix particles 10 of the individual Examples all have relatively high cycle capacity retention rates, all above 95.8%. In addition, the matrix particles 10 of the individual Examples all have relatively high specific capacities. The first-cycle lithium intercalation specific capacities of the matrix particles 10 of the individual Examples are all greater than or equal to 1773 mAh/g, and the first-cycle lithium deintercalation specific capacities of the matrix particles 10 of the individual Examples are all greater than or equal to 1627 mAh/g, showing that the matrix particles 10 of the disclosure have high lithium intercalation specific capacities, and these specific capacities have high reversibility (i.e., high lithium deintercalation specific capacities). From the test data of Comparative Examples 1 and 2, it can be seen that, when Ia/Ib of the matrix particles 10 is less than 0.5, the cycle capacity retention rate of the coin-type half-cells 500 prepared using such matrix particles 10 is greatly reduced. This shows that, when Ia/Ib of the matrix particles 10 is between 0.5 and 0.95, the matrix particles 10 have higher cycle capacity retention rates and can maintain relatively high specific capacities.

From the test data in Tables 1 and 2, it can be seen that, when the average particle size of the silicon particles 12 in the matrix particles 10 of Examples 1 to 4 is less than 2 nm, the coin-type half-cells 500 prepared using such matrix particles 10 all have relatively high cycle capacity retention rates, all above 95.8%. In addition, the matrix particles 10 of the individual Examples have relatively high specific capacities. The first-cycle lithium intercalation specific capacities of the matrix particles 10 of the individual Examples are all greater than or equal to 1773 mAh/g, and the first-cycle lithium deintercalation specific capacities of the matrix particles 10 of the individual Examples are all greater than or equal to 1627 mAh/g. From the test data of Comparative Examples 1 and 2, it can be seen that, when the average particle size D1 of the silicon particles 12 in the matrix particles 10 is greater than 2 nm, the cycle capacity retention rate of the coin-type half-cells 500 prepared using such matrix particles 10 is greatly reduced. This shows that, when the average particle size of the silicon particles 12 in the matrix particles 10 is less than 2 nm, the matrix particles 10 have higher cycle capacity retention rates and can maintain relatively high specific capacities.

The following further describes the negative electrode active particle 100 and the battery 500 of the disclosure through specific examples.

### Example 5

The negative electrode active particle 100 of this example was prepared by the following operations:
1) 1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h.
3) Formation of carbon coating layer 13: The temperature was heated to 650°C, and a mixed gas of acetylene (first organic gas)/nitrogen (first carrier gas) was introduced as the first organic carbon source, where the volume concentration V1 of acetylene was 10%. The reaction was carried out for 1 h, thereby obtaining the matrix particle 10.
4) Formation of carbon microspheres 20: The matrix particles 10 were heated to 700°C, and a mixed gas of acetylene (second organic gas)/nitrogen (second carrier gas) was introduced as the second organic carbon source, where the volume concentration V1 of acetylene was 50%. The reaction was carried out for 2 h, thereby obtaining the negative electrode active particle 100.

### Example 6

The negative electrode active particle 100 of this example was prepared by the following operations:
1) 1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h.
3) Formation of carbon coating layer 13: The temperature was heated to 650°C, and a mixed gas of acetylene (first organic gas)/nitrogen (first carrier gas) was introduced as the first organic carbon source, where the volume concentration V1 of acetylene was 10%. The reaction was carried out for 1 h, thereby obtaining the matrix particle 10.
4) Formation of carbon microspheres 20: The matrix particles 10 were mixed with a glucose solution with a mass concentration of 50 wt%, and then heated to 100°C and dried for h; then heated to 700°C in a nitrogen atmosphere and carbonized for 1 h, thereby obtaining the negative electrode active particle 100.

### Example 7

The negative electrode active particle 100 of this example was prepared by the following operations:
1) 1000 g of spherical porous carbon was loaded into a chemical vapor deposition furnace to serve as a porous skeleton 11. The porous skeleton 11 had an average sphericity of 0.92, and included a plurality of pores 111. The average size of the pores 111 was 1.8 nm, and the pore volume of the porous skeleton 11 was 0.7 cm³/g.
2) Deposition of silicon particles 12: Nitrogen was introduced, and the temperature was heated to 530°C. Then, a mixed gas of silane and nitrogen (protective gas) was introduced, and the reaction was carried out for 24 h.
3) Formation of carbon coating layer 13: The temperature was heated to 650°C, and a mixed gas of acetylene (first organic gas)/nitrogen (first carrier gas) was introduced as the first organic carbon source, where the volume concentration V1 of acetylene was 10%. The reaction was carried out for 1 h, thereby obtaining the matrix particle 10.
4) Formation of carbon microspheres 20: The matrix particles 10 were heated to 700°C, and a mixed gas of acetylene (second organic gas)/nitrogen (second carrier gas) was introduced as the second organic carbon source, where the volume concentration V1 of acetylene was 50%. The reaction was carried out for 2 h.

Formation of wrapping layer 30: The powder from operation 4) was mixed with a dispersion of carbon nanotubes (conductive agent) (the ratio of mass of the powder to mass of the carbon nanotube was 100:0.5) and dried, thereby obtaining the negative electrode active particle 100.

### Comparative Example 3

The negative electrode active particle 100 of this comparative example was prepared by the following operations:
1) 1000 g of spherical porous carbon was loaded into a chemical vapor deposition furnace to serve as a porous skeleton 11. The porous skeleton 11 had an average sphericity of 0.97, and included a plurality of pores 111. The average size of the pores 111 was 1.7 nm, and the pore volume of the porous skeleton 11 was 0.85 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h.
3) Formation of carbon coating layer 13: The temperature was heated to 650°C, and a mixed gas of acetylene (first organic gas)/nitrogen (first carrier gas) was introduced as the first organic carbon source, where the volume concentration V1 of acetylene was 10%. The reaction was carried out for 1 h, thereby obtaining the matrix particle 10 as the negative electrode active particle 100.

### Comparative Example 4

The negative electrode active particle 100 of this comparative example was prepared by the following operations:
1) 1000 g of irregular porous carbon was loaded into a chemical vapor deposition furnace to serve as a porous skeleton 11. The porous skeleton 11 had an average sphericity of 0.59, and included a plurality of pores 111. The average size of the pores 111 was 1.8 nm, and the pore volume of the porous skeleton 11 was 0.7 cm³/g.
2) Deposition of silicon particles 12: Nitrogen was introduced, and the temperature was heated to 500°C. Then, a mixed gas of silane and nitrogen (protective gas) was introduced, and the reaction was carried out for 24 h.
3) Formation of carbon coating layer 13: The temperature was heated to 650°C, and a mixed gas of acetylene (first organic gas)/nitrogen (first carrier gas) was introduced as the first organic carbon source, where the volume concentration V1 of acetylene was 10%. The reaction was carried out for 1 h, thereby obtaining the matrix particle 10.
4) Formation of carbon microspheres 20: The matrix particles 10 were heated to 700°C, and a mixed gas of acetylene (second organic gas)/nitrogen (second carrier gas) was introduced as the second organic carbon source, where the volume concentration V1 of acetylene was 50%. The reaction was carried out for 2 h, thereby obtaining the negative electrode active particles 100.

The preparation, capacity grading, and cycling test methods for the coin-type half-cells 500 are as described in the corresponding parts above and will not be repeated here.

The parameters of the negative electrode active particles 100 of Examples 5 to 7, Comparative Example 3, and Comparative Example 4, and the performance tests of the coin-type half-cells 500 formed therefrom, are shown in Table 4 and Table 5 below.

**Table 4**

| Example | Specific surface area of negative electrode active particles (m²/g) | D50 (µm) | Average particle size d1 of carbon microspheres (nm) | Mass fraction of carbon microspheres | Compaction density of negative electrode active particles (g/cm³) |
|---|---|---|---|---|---|
| Example 5 | 3.4 | 5.7 | 162 | 1.5 wt% | 1.08 |
| Example 6 | 4.6 | 5.3 | 280 | 2.1 wt% | 1.02 |
| Example 7 | 5.2 | 6.4 | 161 | 1.5 wt% | 1.01 |
| Comp. Ex. 3 | 2.8 | 5.1 | / | / | 1.11 |
| Comp. Ex. 4 | 3.7 | 5.8 | 164 | 1.6 wt% | 1.07 |

**Table 5**

| Example | First-cycle lithium deintercalation specific capacity (mAh/g) | ICE of negative electrode active particles | Capacity retention rate after 100 cycles |
|---|---|---|---|
| Example 5 | 1723 | 92.7% | 97.0% |
| Example 6 | 1616 | 92.4% | 96.8% |
| Example 7 | 1742 | 93.1% | 98.2% |
| Comparative Example 3 | 1783 | 92.2% | 91.1% |
| Comparative Example 4 | 1702 | 92.0% | 93.4% |

A scanning electron microscope image of the negative electrode active particles 100 prepared in Example 6 is shown in FIG. 15. As can be seen from FIG. 15, a plurality of carbon microspheres 20 spaced from each other are formed on the surface of the matrix particle 10. As can be seen from FIG. 15, the method of the disclosure can produce negative electrode active particles 100 having a concave-convex structure on the surface.

From the test data of Examples 5 to 7 and Comparative Examples 3 to 4, it can be seen that the batteries 500 prepared using the negative electrode active particles 100 of the disclosure have higher initial coulombic efficiency and higher cycle capacity retention rates. The 100-cycle capacity retention rates of the batteries 500 prepared using the negative electrode active particles 100 of the disclosure are all greater than or equal to 96.8%.

From the test data of Example 5 and Comparative Example 3, it can be seen that, compared with the negative electrode active particle 100 without carbon microspheres 20 on the surface (Comparative Example 3), the matrix particle 10 of Example 5 has a plurality of carbon microspheres 20 on the surface, and the battery 500 prepared using the negative electrode active particles 100 of Example 5 has a higher capacity retention rate after 100 cycles and higher initial coulombic efficiency. This shows that forming the carbon microspheres 20 on the surface of the matrix particle 10 is beneficial for improving the cycling performance and initial coulombic efficiency of the negative electrode active particles 100.

From the test data of Example 5 and Comparative Example 4, it can be seen that, under otherwise similar conditions, the sphericity of the porous skeleton 11 of Comparative Example 4 is much lower than that of Example 5. Compared with the negative electrode active particle 100 of Comparative Example 4, the battery 500 prepared using the negative electrode active particles 100 of Example 5 has higher initial coulombic efficiency and higher cycle capacity retention rate.

Compared with the negative electrode active particle 100 of Example 6, the negative electrode active particle 100 of Example 7 additionally includes a wrapping layer 30 (the wrapping layer 30 includes a conductive agent). Compared with Example 6, the battery 500 prepared using the negative electrode active particles 100 of Example 7 has higher initial coulombic efficiency and higher cycle capacity retention rate.

Referring to FIG. 16 and FIG. 17, the embodiments of the disclosure further provide an electronic device 600, which includes a device body 610 and the battery 500 according to the embodiments of the disclosure. The battery 500 is used to supply power to the device body 610.

The electronic device 600 of the embodiments of the disclosure may be, but not limited to, portable electronic devices 600, such as mobile phones, tablet computers, notebook computers, desktop computers, smart toys, smart glasses, smart bracelets, smart watches, e-readers, game consoles, toys, etc.

For detailed descriptions of the battery 500, reference may be made to the corresponding parts of the above embodiments, which will not be repeated here.

It can be understood that the electronic device 600 described in the embodiments is merely one form of the electronic device 600 to which the battery 500 is applied, and should not be construed as limiting the electronic device 600 provided by the disclosure, nor as limiting the battery 500 provided by the various embodiments of the disclosure.

In some implementations, the device body 610 of the embodiments of the disclosure further includes a display screen 611, a middle frame 613, and a housing 615. The housing 615 is provided opposite to the display screen 611. The middle frame 613 is located between the display screen 611 and the housing 615, and side walls of the middle frame 613 are exposed from the display screen 611 and the housing 615. The middle frame 613 and the housing 615 define a receiving space for receiving the battery 500. The display screen 611 is electrically connected to the battery 500, and the battery 500 supplies power to the display screen 611.

In some implementations, the display screen 611 may be, but not limited to, one or more of a liquid crystal display, a light-emitting diode display (LED display), a micro light-emitting diode display (Micro LED display), a mini light-emitting diode display (Mini LED display), an organic light-emitting diode display (OLED display), and the like.

Referring also to FIG. 18, in some implementations, the device body 610 of the disclosure further includes a processor 617 and a memory 616. The processor 617 and the memory 616 are provided in the receiving space. The processor 617 is electrically connected to each of the battery 500, the display screen 611, and the memory 616. The processor 617 is used to control the display screen 611 to display. The memory 616 is used to store program codes required for the operation of the processor 617, program codes required for controlling the display screen 611, display content of the display screen 611, etc.

In some implementations, the processor 617 includes one or more general-purpose processors, where the general-purpose processor may be any type of device capable of processing electronic instructions, including a central processing unit (CPU), a microprocessor, a microcontroller, a main processor, a controller, an ASIC, etc. The processor 617 is used to execute various types of digital storage instructions, such as software or firmware programs stored in the memory 616, which enables the computing device to provide a wide variety of services.

In some implementations, the memory 616 may include a volatile memory, such as random access memory (RAM). The memory 616 may also include a non-volatile memory (NVM), such as read-only memory (ROM), flash memory (FM), hard disk drive (HDD), or solid-state drive (SSD). The memory 616 may also include a combination of the above types of memories 616.

In some embodiments, the device body 610 of the embodiments of the disclosure further includes a camera module 618 provided in the receiving space. The camera module 618 is electrically connected to each of the processor 617 and the battery 500, and is used to capture images under the control of the processor 617. The battery 500 also supplies power to the camera module 618.

In some implementations, the housing 615 has a light-transmitting portion (not shown in the figures). The camera module 618 may capture images through the light-transmitting portion on the housing 615, i.e., the camera module 618 in the embodiment is a rear camera module 618. It can be understood that, in some other embodiments, the light-transmitting portion may be provided on the display screen 611, i.e., the camera module 618 is a front camera module 618. In the schematic diagrams of the embodiment, the light-transmitting portion is illustrated as an opening. In some other embodiments, the light-transmitting portion may not be an opening, but may be made of a light-transmitting material, such as plastic, glass, etc.

In the disclosure, the phrase "an embodiment" or "an implementation" means that a particular feature, structure, or characteristic described in connection with the embodiment is included in at least one embodiment of the disclosure. The appearances of the phrase in various places in the specification are not necessarily all referring to the same embodiment, nor are they independent or alternative embodiments mutually exclusive with other embodiments. Those skilled in the art will explicitly and implicitly understand that the embodiments described in the disclosure can be combined with other embodiments. In addition, it should also be understood that the features, structures, or characteristics described in the various embodiments of the disclosure can be combined in any manner, as long as there is no contradiction between them, to form further embodiments that do not depart from the spirit and scope of the technical solutions of the disclosure.

Finally, it should be noted that the above embodiments are only used to illustrate the technical solutions of the disclosure, and are not intended to limit the disclosure. Although the disclosure has been described in detail with reference to the above preferred embodiments, those of ordinary skill in the art should understand that modifications or equivalent substitutions to the technical solutions of the disclosure should not depart from the spirit and scope of the technical solutions of the disclosure.

## Claims

1. A negative electrode active particle, comprising:
a matrix particle; and
a plurality of carbon microspheres, wherein the plurality of carbon microspheres are distributed on a surface of the matrix particle, and an average particle size d1 of the carbon microspheres and an average particle size d2 of the matrix particle satisfy a relationship: 0.001 ≤ d1/d2 ≤ 0.5.

2. The negative electrode active particle as claimed in claim 1, wherein the average particle size d1 of the carbon microspheres is in a range of 50 nm ≤ d1 ≤ 2000 nm.

3. The negative electrode active particle as claimed in claim 1, wherein a mass fraction of the plurality of carbon microspheres in the negative electrode active particle ranges from 0.05 wt% to 5 wt%.

4. The negative electrode active particle as claimed in claim 1, wherein the carbon microspheres comprise a carbon element and a first doping element, a mass fraction of the carbon element in the carbon microspheres ranges from 50 wt% to 100 wt%; the first doping element comprises at least one of carbon, nitrogen, oxygen, fluorine, chlorine, phosphorus, sulfur, titanium, zirconium, vanadium, molybdenum, tungsten, aluminum, and iron; and a mass fraction of the first doping element in the carbon microspheres ranges from 0 to 50%.

5. The negative electrode active particle as claimed in any one of claims 1 to 4, wherein the negative electrode active particle further comprises a wrapping layer provided on surfaces of the plurality of carbon microspheres, and the wrapping layer comprises at least one of a conductive agent and a binder.

6. The negative electrode active particle as claimed in any one of claims 1 to 4, wherein the matrix particle comprises:
a porous skeleton having a plurality of pores;
silicon particles, wherein the silicon particles are located in the plurality of pores, and there is a gap between each of the silicon particles and an inner wall of a respective pore; and
a carbon coating layer, wherein the carbon coating layer wraps around an outer periphery of the porous skeleton to close the gaps, thereby forming closed pores from the gaps;
wherein an average sphericity of the matrix particle is greater than or equal to 0.8.

7. The negative electrode active particle as claimed in claim 6, wherein an average mass fraction of the silicon particles in a negative electrode active material composed of a plurality of the negative electrode active particles is A, and a mass fraction of silicon particles in each of 80% or more of the plurality of negative electrode active particles ranges from A-10 wt% to A+10 wt%.

8. The negative electrode active particle as claimed in claim 6, wherein in the negative electrode active particle, a mass fraction of the silicon particles ranges from 20 wt% to 80 wt%, and 90 wt% or more of the silicon particles are distributed in the plurality of pores.

9. The negative electrode active particle as claimed in claim 6, wherein the closed pores and the silicon particles satisfy a relationship 0.5 ≤ Ia/Ib ≤ 0.95, where Ia represents a minimum diffraction intensity in a range of 2θ from 8.8° to 22° in an X-ray diffraction pattern of the negative electrode active particle, Ib represents an intensity of a Si(111) diffraction peak at 2θ from 28.2° to 28.5° in the X-ray diffraction pattern of the negative electrode active particle, and 2θ represents a diffraction angle.

10. The negative electrode active particle as claimed in claim 6, wherein a mass fraction of a silicon element in the negative electrode active particle ranges from 5 wt% to 95 wt%.

11. The negative electrode active particle as claimed in claim 6, wherein the porous skeleton comprises a carbon element and a second doping element, the second doping element comprises at least one of nitrogen, oxygen, fluorine, chlorine, phosphorus, sulfur, silicon, titanium, zirconium, vanadium, molybdenum, tungsten, aluminum, and iron; and a mass fraction of the carbon element in the porous skeleton is greater than or equal to 80 wt%;
or,
the porous skeleton is at least one of a porous carbide, a porous nitride, and a porous metal-organic compound.

12. The negative electrode active particle as claimed in claim 7, wherein the silicon particles satisfy at least one of following conditions:
the silicon particles comprise a silicon element, and a mass fraction of the silicon element in the silicon particles is greater than or equal to 50 wt%; and
the silicon particles further comprise a third doping element, the third doping element comprises at least one of carbon, nitrogen, oxygen, fluorine, chlorine, phosphorus, sulfur, titanium, zirconium, vanadium, molybdenum, tungsten, aluminum, and iron, and a mass fraction of the third doping element in the silicon particles is less than or equal to 50 wt%.

13. The negative electrode active particle as claimed in claim 6, wherein a size of the closed pores is less than or equal to 4 nm, and an average particle size d3 of the silicon particles is in a range of 0.4 nm ≤ d3 ≤ 4 nm.

14. A method for preparing a negative electrode active particle, comprising:
providing a matrix particle; and
forming a plurality of carbon microspheres on a surface of the matrix particle, wherein an average particle size d1 of the carbon microspheres and an average particle size d2 of the matrix particle satisfy a relationship: 0.001 ≤ d1/d2 ≤ 0.5.

15. The method for preparing a negative electrode active particle as claimed in claim 14, wherein the providing the matrix particle comprises:
providing a porous skeleton, wherein the porous skeleton has a plurality of pores, and an average sphericity of the porous skeleton is greater than or equal to 0.8;
depositing silicon particles in the plurality of pores by introducing a silicon source gas into the porous skeleton; and
obtaining the matrix particle by forming a carbon coating layer on a surface of the porous skeleton having the silicon particles, wherein the matrix particle comprises the porous skeleton, the silicon particles, and the carbon coating layer; the silicon particles are located in the plurality of pores, and there is a gap between each of the silicon particles and an inner wall of a respective pore; and the carbon coating layer wraps around an outer periphery of the porous skeleton to close the gaps, thereby forming closed pores from the gaps.

16. The method for preparing a negative electrode active particle as claimed in claim 15, wherein the depositing the silicon particles in the plurality of pores by introducing the silicon source gas into the porous skeleton, comprises:
depositing the silicon particles in the plurality of pores by introducing the silicon source gas at a first temperature T1, wherein the first temperature is in a range of 400°C ≤ T1 ≤ 700°C, and a ratio m/V' of a mass m of the silicon source gas to a total volume V' of the plurality of pores of the porous skeleton is in a range of 0.05 g/cm³ ≤ m/V' ≤ 2.0 g/cm³.

17. The method for preparing a negative electrode active particle as claimed in claim 15, wherein the forming the carbon coating layer on the surface of the porous skeleton having the silicon particles comprises:
forming the carbon coating layer on the surface of the porous skeleton having the silicon particles, in a first organic carbon source at a second temperature T2, the second temperature T2 being in a range of 500°C ≤ T2 ≤ 900°C.

18. The method for preparing a negative electrode active particle as claimed in claim 17, wherein the forming the plurality of carbon microspheres on the surface of the matrix particle comprises:
placing the matrix particle in a second organic carbon source, and forming the plurality of carbon microspheres on the surface of the matrix particle at a third temperature T3, the third temperature T3 being in a range of 300°C ≤ T3 ≤ 900°C.

19. The method for preparing a negative electrode active particle as claimed in claim 18, wherein the first organic carbon source comprises a first organic gas and a first carrier gas, and the second organic carbon source comprises a second organic gas and a second carrier gas; the second temperature T2 is lower than the third temperature T3, and a volume concentration of the first organic gas in the first organic carbon source is lower than a volume concentration of the second organic gas in the second organic carbon source.

20. The method for preparing a negative electrode active particle as claimed in claim 19, wherein a difference T3-T2 between the third temperature T3 and the second temperature T2 is in a range of 20°C ≤ T3-T2 ≤ 250°C; or
a difference V2-V1 between the volume concentration V2 of the second organic gas in the second organic carbon source and the volume concentration V1 of the first organic gas in the first organic carbon source is in a range of 5% ≤ V2-V1 ≤ 99%; or
a difference T3-T2 between the third temperature T3 and the second temperature T2 is in a range of 20°C ≤ T3-T2 ≤ 250°C, and a difference V2-V1 between the volume concentration V2 of the second organic gas in the second organic carbon source and the volume concentration V1 of the first organic gas in the first organic carbon source is in a range of 5% ≤ V2-V1 ≤ 99%.

21. A negative electrode active particle, comprising a matrix particle, and the matrix particle comprising:
a porous skeleton having a plurality of pores;
silicon particles, wherein the silicon particles are located in the plurality of pores, and there is a gap between each of the silicon particles and an inner wall of a respective pore; and
a carbon coating layer, wherein the carbon coating layer wraps around an outer periphery of the porous skeleton to close the gaps, thereby forming closed pores from the gaps;
wherein an average sphericity of the matrix particle is greater than or equal to 0.8, an average mass fraction of the silicon particles in a negative electrode active material composed of a plurality of the negative electrode active particles is A, and a mass fraction of silicon particles in each of 80% or more of the negative electrode active particles ranges from A-10 wt% to A+10 wt%.

22. The negative electrode active particle as claimed in claim 21, wherein the closed pores and the silicon particles satisfy a relationship 0.5 ≤ Ia/Ib ≤ 0.95, where Ia represents a minimum diffraction intensity in a range of 2θ from 8.8° to 22° in an X-ray diffraction pattern of the negative electrode active particle, Ib represents an intensity of a Si(111) diffraction peak at 2θ from 28.2° to 28.5° in the X-ray diffraction pattern of the negative electrode active particle, and 2θ represents a diffraction angle.

23. The negative electrode active particle as claimed in claim 21, wherein in the negative electrode active particle, a mass fraction of the silicon particles ranges from 20 wt% to 80 wt%, and 90 wt% or more of the silicon particles are distributed in the plurality of pores; and
a mass fraction of a silicon element in the negative electrode active particle ranges from 5 wt% to 95 wt%.

24. The negative electrode active particle as claimed in claim 21, wherein the porous skeleton comprises a carbon element and a second doping element, the second doping element comprises at least one of nitrogen, oxygen, fluorine, chlorine, phosphorus, sulfur, silicon, titanium, zirconium, vanadium, molybdenum, tungsten, aluminum, and iron; and a mass fraction of the carbon element in the porous skeleton is greater than or equal to 80 wt%;
or,
the porous skeleton is at least one of a porous carbide, a porous nitride, and a porous metal-organic compound.

25. The negative electrode active particle as claimed in claim 21, wherein the silicon particles satisfy at least one of the following conditions:
the silicon particles comprise a silicon element, and a mass fraction of the silicon element in the silicon particles is greater than or equal to 50 wt%; and
the silicon particles further comprise a third doping element, the third doping element comprises at least one of carbon, nitrogen, oxygen, fluorine, chlorine, phosphorus, sulfur, titanium, zirconium, vanadium, molybdenum, tungsten, aluminum, and iron, and a mass fraction of the third doping element in the silicon particles is less than or equal to 50 wt%.

26. The negative electrode active particle as claimed in any one of claims 21 to 25, wherein a size of the closed pores is less than or equal to 4 nm, and an average particle size d3 of the silicon particles is in a range of 0.4 nm ≤ d3 ≤ 4 nm.

27. The negative electrode active particle as claimed in any one of claims 21 to 25, wherein the negative electrode active particle further comprises:
a plurality of carbon microspheres, wherein the plurality of carbon microspheres are distributed on a surface of the matrix particle, and an average particle size d1 of the carbon microspheres and an average particle size d2 of the matrix particle satisfy a relationship: 0.001 ≤ d1/d2 ≤ 0.5.

28. The negative electrode active particle as claimed in claim 27, wherein the carbon microspheres satisfy at least one of following conditions:
the average particle size d1 of the carbon microspheres is in a range of 50 nm ≤ d1 ≤ 2000 nm; and
a mass fraction of the plurality of carbon microspheres in the negative electrode active particle ranges from 0.05 wt% to 5 wt%.

29. The negative electrode active particle as claimed in claim 27, wherein the carbon microspheres comprise a carbon element and a first doping element, a mass fraction of the carbon element in the carbon microspheres ranges from 50 wt% to 100 wt%; the first doping element comprises at least one of carbon, nitrogen, oxygen, fluorine, chlorine, phosphorus, sulfur, titanium, zirconium, vanadium, molybdenum, tungsten, aluminum, and iron, and a mass fraction of the first doping element in the carbon microspheres ranges from 0 to 50%.

30. The negative electrode active particle as claimed in claim 27, wherein the negative electrode active particle further comprises a wrapping layer provided on surfaces of the plurality of carbon microspheres, and the wrapping layer comprises at least one of a conductive agent and a binder.

31. A method for preparing a negative electrode active particle, wherein the negative electrode active particle comprises a matrix particle, and the method comprises:
providing a porous skeleton, wherein the porous skeleton has a plurality of pores, and an average sphericity of the porous skeleton is greater than or equal to 0.8;
depositing silicon particles in the plurality of pores by introducing a silicon source gas into the porous skeleton; and
obtaining the matrix particle by forming a carbon coating layer on a surface of the porous skeleton having the silicon particles, wherein the matrix particle comprises the porous skeleton, the silicon particles, and the carbon coating layer; the silicon particles are located in the plurality of pores, and there is a gap between each of the silicon particles and an inner wall of a respective pore; the carbon coating layer wraps around an outer periphery of the porous skeleton to close the gaps, thereby forming closed pores from the gaps; an average sphericity of the matrix particle is greater than or equal to 0.8, an average mass fraction of silicon particles in a negative electrode active material composed of a plurality of the negative electrode active particles is A, and a mass fraction of silicon particles in each of 80% or more of the negative electrode active particles ranges from A-10 wt% to A+10 wt%.

32. The method for preparing a negative electrode active particle as claimed in claim 31, wherein the depositing the silicon particles in the plurality of pores by introducing the silicon source gas into the porous skeleton comprises:
depositing the silicon particles in the plurality of pores by introducing the silicon source gas at a first temperature T1, wherein the first temperature is in a range of 400°C ≤ T1 ≤ 700°C, and a ratio m/V' of a mass m of the silicon source gas to a total volume V' of the plurality of pores of the porous skeleton is in a range of 0.05 g/cm³ ≤ m/V' ≤ 2.0 g/cm³; and
the forming the carbon coating layer on the surface of the porous skeleton having the silicon particles, comprises:
forming the carbon coating layer on the surface of the porous skeleton having the silicon particles, in a first organic carbon source at a second temperature T2, the second temperature T2 being in a range of 500°C ≤ T2 ≤ 900°C.

33. The method for preparing a negative electrode active particle as claimed in claim 32, wherein the negative electrode active particle further comprises a plurality of carbon microspheres distributed on a surface of the matrix particle, and the method further comprises:
placing the matrix particle in a second organic carbon source, and forming the plurality of carbon microspheres on the surface of the matrix particle at a third temperature T3, the third temperature T3 being in a range of 300°C ≤ T3 ≤ 900°C.

34. The method for preparing a negative electrode active particle as claimed in claim 33, wherein the first organic carbon source comprises a first organic gas and a first carrier gas, and the second organic carbon source comprises a second organic gas and a second carrier gas; the second temperature T2 is lower than the third temperature T3, and a volume concentration of the first organic gas in the first organic carbon source is lower than a volume concentration of the second organic gas in the second organic carbon source.

35. The method for preparing a negative electrode active particle as claimed in claim 34, wherein a difference T3-T2 between the third temperature T3 and the second temperature T2 is in a range of 20°C ≤ T3-T2 ≤ 250°C; or
a difference V2-V1 between the volume concentration V2 of the second organic gas in the second organic carbon source and the volume concentration V1 of the first organic gas in the first organic carbon source is in a range of 5% ≤ V2-V1 ≤ 99%; or
a difference T3-T2 between the third temperature T3 and the second temperature T2 is in a range of 20°C ≤ T3-T2 ≤ 250°C, and a difference V2-V1 between the volume concentration V2 of the second organic gas in the second organic carbon source and the volume concentration V1 of the first organic gas in the first organic carbon source is in a range of 5% ≤ V2-V1 ≤ 99%.

36. A negative electrode plate, comprising:
a negative electrode current collector; and
a negative electrode active layer, wherein the negative electrode active layer is provided on a surface of the negative electrode current collector, the negative electrode active layer comprises the negative electrode active particle as claimed in any one of claims 1 to 13 or claims 21 to 30, or the negative electrode active particle prepared by the method for preparing a negative electrode active particle as claimed in any one of claims 14 to 20 or claims 31 to 35.

37. A battery, comprising:
an electrolyte;
a positive electrode plate, wherein the positive electrode plate is at least partially immersed in the electrolyte;
a separator, wherein the separator is located on one side of the positive electrode plate and at least partially immersed in the electrolyte; and
the negative electrode plate as claimed in claim 36, wherein the negative electrode plate is provided on a side of the separator away from the positive electrode plate and at least partially immersed in the electrolyte.

38. An electronic device, comprising:
a device body; and
the battery as claimed in claim 37, the battery being configured to supply power to the device body.
